# EUROPEAN PATENT SPECIFICATION

(11) **EP 3 824 985 B1**
(45) Date of publication and mention of the grant of the patent: **29.04.2026**
(21) Application number: 20208792.0
(22) Date of filing: 20.11.2020
(51) Int. Cl.: B01D 25/12, B01D 29/05, B01D 29/58, B01D 29/64, B01D 29/94, B01D 36/02, B01D 29/76

(54) **SUPERIMPOSED COMBINED PRESS FILTER**
ÜBERLAGERTER KOMBINIERTER PRESSFILTER
FILTRE-PRESSE COMBINÉ SUPERPOSÉ

(30) Priority: 22.11.2019 CN 201911155838
(43) Date of publication of application: 26.05.2021
(73) Proprietor: Frapp's Chemical Industry (Suichang) Co., Ltd, Lishui City, Zhejiang 323316 (CN)
(72) Inventor: Mao, Weiqing, WENLING CITY, Zhejiang 317500 (CN); Li, Yuehui, Suichang County, Zhejiang 323317 (CN); He, Gaofeng, Suichang County, Zhejiang 323305 (CN); Xia, Hao, Suichang County, Zhejiang 323300 (CN); Zhou, Hanbin, Wenling City, Zhejiang 317500 (CN); Zhu, Jianbin, Suichang Count, Zhejiang 323307 (CN); Zhang, Hao, Yichang City, Hubei 443105 (CN); Sun, Peng, Tianjin, 300240 (CN); Pan, Yeshun, Quanzhou City, Fujian 362804 (CN); Wang, Zhibang, Taihe County, Anhui 236699 (CN); Feng, Zhansheng, Jinshi City, Hunan 415499 (CN)
(74) Representative: Novagraaf Group

(56) References cited:
- CN-A- 108 339 302
- CN-A- 109 731 393
- GB-A- 2 190 603
- US-A- 5 112 479

## Description

### Technical Field

The present invention relates to a press filter, in particular to a superimposed combined press filter, which can be applied to various solid-liquid separation fields such as petrochemical industry, pharmaceutical chemical industry, dye chemical industry, pesticide chemical industry, pigment chemical industry and environmental protection treatment.

### Background

The press filter is mainly used for solid-liquid separation, so that the separated liquid part and solid part are reused, thereby not only effectively avoiding the environmental pollution by wastewater, but also driving significant economic benefits. The press filter in the prior art can separate wastewater to a certain extent.

CN 109 731 393 A discloses a combined press filter comprising a plate type pressure filter and a six-in-one pressure filter. The filtering area of the press filter in the prior art is limited, which causes poor filtering effect and waste of material resources. In view of the technical defects in the prior art, the primary problem is to improve the cleaning effect without wasting material resources. Therefore, it is extremely urgent to create a superimposed combined press filter, which can greatly increase the filtering area, thereby improving the filtering efficiency and making the filter have more industrial use value.

### Summary

To solve the above technical problems, the purpose of the present invention is to provide a press filter according to claim 1 formed by superimposing multiple layers in a superimposed combination manner, which greatly increases the filtering area, thereby greatly improving the filtering effect, easily filtering massive materials, improving the cleaning effect to the greatest extent, and realizing no residue between batches.

The present invention provides a superimposed combined press filter, which comprises a superimposed filter and a six-in-one press filter, wherein a solid discharge port of the superimposed filter is connected with a feed port of the six-in-one press filter; a sealing device is arranged at a joint between the solid discharge port and the feed port; the two ports are connected by a valve switch; a flange is connected by a sealing gasket and screws; and the superimposed filter comprises multiple layers of superimposed laminates.

The superimposed filter is used for performing primary filtration on materials to be filter-pressed and then conveying the obtained solids to the six-in-one press filter; and the six-in-one press filter is used for performing secondary filtration on the solids.

The superimposed filter is composed of atop plate, laminates, a bottom plate, layer connecting flanges, a sintered mesh, filter meshes, filter cloth, a first stirring shaft, S-shaped scraper type stirrers, a speed reducer, a motor, a feed port, a liquid discharge port and a solid discharge port, wherein the motor is connected with the speed reducer by a flange; the first stirring shaft is connected with the motor through the speed reducer; and three S-shaped scraper type stirrers are mounted on the first stirring shaft.

Multiple layers of laminates are provided, wherein the laminates are connected and locked by the layer connecting flanges or quick-opening flanges. Laver cavities are formed between the laminates: and two layers of filter meshes are configured in each layer cavity. Diversion grooves are formed in the laminates on the reverse sides of the filter meshes; filtrate outlets and sight glasses are arranged on side edges of the laminates; and filtrate flows to the laminates through the diversion grooves. Pipes are welded with the laminates and are connected to the outside through an interlayer between an upper filter plate and a lower filter plate. Discharge ports are reserved between an upper layer and a lower layer; feed ports and discharge ports are reserved at the top and the bottom; the feed ports are connected with a material source; the discharge ports are connected with the six-in-one press filter; and valves are mounted at joints.

Filter plates are integrated on the laminates; and mesh plates are arranged on the laminates.

Preferably, the six-in-one press filter comprises a sealing head, a barrel body, a transmission mechanism, a material pressing assembly, a pressing plate assembly and a bottom assembly.

The sealing head is connected to the barrel body, and is welded or connected through a bolt by a flange. A base is welded at the top of the sealing head; and the pressing assembly is connected to the sealing head. The pressing plate assembly is arranged inside the barrel body and connected with the material pressing assembly. The bottom assembly is located below the barrel body and welded with the barrel body.

A feed port and a cleaning port are formed at one end of the sealing head; and a liquid outlet and a vent port are formed at the other end. A pressure relief valve, a pressure gauge, a viewing port, a gas sealing port, access ports, a pressing plate heating or freezing inlet and a pressing plate heating or freezing outlet are also provided. Upper brackets of jacking oil cylinder are arranged at two opposite sides of the sealing head.

Preferably, the barrel body is provided with a barrel flange, a skirt edge and a temperature measuring tube, wherein the barrel flange is welded with the barrel body. Jackets and lower brackets of jacking oil cylinder are welded at two opposite sides of the barrel body; the jacket at one side is provided with a jacket heating or freezing inlet; and the jacket at the other side is provided with a jacket heating or freezing outlet. The discharge port assembly is arranged outside the barrel body and is welded with the barrel body. The feed port connected with the superimposed filter is formed in the barrel body.

Preferably, the discharge port assembly comprises guide columns, a discharge oil cylinder, an oil cylinder fixing plate, fastening screw rods, a welded seat, a discharge port sealing plate and a discharge port inner pump.

Two guide columns are provided, wherein one end of each guide column is welded with the barrel body; the other end of each guide column is connected with the oil cylinder fixing plate; and the oil cylinder fixing plate is connected with the discharging oil cylinder. Two fastening screw rods are arranged between the guide columns, wherein one end of each fastening screw rod is connected with the oil cylinder fixing plate; the other end of each fastening screw rod is connected with the welded seat; the welded seat is connected with the discharge port inner pump; a sealing ring is mounted on the barrel body; and the discharge port inner pump is pushed by the discharge oil cylinder to be sealed by the sealing ring of the barrel body.

Preferably, the transmission mechanism comprises a speed reducer motor, an explosion-proof motor, a stirring shaft, an S-shaped scraper, a shaft-lifting upper panel, a shaft-lifting lower panel and a shaft-lifting oil cylinrler

The explosion-proof motor is connected with the speed reducer motor; the speed reducer motor is connected with the stirring shaft; one end of the stirring shaft is connected with the S-shaped scraper; and the other end of the stirring shaft is connected with the shaft-lifting upper panel. The shaft-lifting lower panel is connected with the speed reducer motor; and the shaft-lifting oil cylinder is connected with the shaft-lifting upper panel and the shaft-lifting lower panel through flanges.

The S-shaped scraper is provided with a shaft sleeve and is connected with the stirring shaft through the shaft sleeve; and a cross section of the S-shaped scraper is rhombic.

Preferably, the material pressing oil cylinder assembly comprises a material pressing oil cylinder, a material pressing oil cylinder tailstock and a hydraulic power station of oil cylinder.

The hydraulic power station of oil cylinder is composed of an explosion-proof motor, an electromagnetic switch valve, a gear pump, hydraulic oil and a hydraulic oil pipe. The material pressing oil cylinder is connected with an oil cylinder seat; and the hydraulic power station is connected with oil pipes by oil pipes.

For the six-in-one filter, a single oil cylinder is used for press-filtering; and for the material pressing oil cylinder, the first design technology of non-standard hollow shaft hydraulic cylinder is adopted to transmit hydraulic pressure to the pressing plate assembly to directly extrude materials up and down, thereby extruding and filtering the materials in the barrel body.

The hydraulic power station uses the explosion-proof motor as power; and an explosion-proof electromagnetic valve works as the electromagnetic switch valve. Multiple groups of control valves and pressure reducing valves are configured to realize multiple groups of different control pressures without mutual interference. The solids obtained by press-filtering are directly discharged to a gear rotating crusher after being stirred by the S-shaped scraper; and the dried materials are crushed.

Preferably, the transmission mechanism is connected with the material pressing oil cylinder assembly and located at the top of the six-in-one press filter; and the speed reducer is connected with the material pressing oil cylinder tailstock.

The pressing plate assembly comprises a pressing plate flange, an upper panel of pressing plate, a lower panel of pressing plate, a concentric reducer of pressing plate, a concentric reducer panel, a sintered mesh of pressing plate, a feed port, a liquid outlet, a copper sleeve assembly, a stirring shaft sleeve, a gas sealing pipe, a gas sealing port, a pressing plate and shaft sleeve sealing groove, a concentric reducer supporting plate and an upper-and-lower panel supporting plate of pressing plate. The pressing plate flange is welded with the upper panel of pressing plate and the lower panel of pressing plate. The concentric reducer of pressing plate is welded with the upper panel of pressing plate. The concentric reducer panel is welded with the concentric reducer of pressing plate. The sintered mesh of pressing plate is welded to the lower panel of pressing plate. The gas sealing pipe is welded with the pressing plate flange, the stirring shaft sleeve and the upper panel of pressing plate. The stirring shaft sleeve is welded with the upper panel of pressing plate and the lower panel of pressing plate.

The bottom assembly comprises a bottom flange, a bottom barrel body, a bottom panel, a bottom sintered mesh a bottom filtrate outlet, a bottom heating or freezing inlet, a bottom heating or freezing outlet, a bottom supporting plate, a bottom reinforcing rib, a locking flange, a locking flange fixing bracket, a locking oil cylinder, an oil cylinder seat, a jacking oil cylinder, an oil cylinder connecting piece and a gas sealing pipe. The bottom flange is welded with the barrel body; the bottom panel is welded with flanges and reinforcing ribs; the bottom sintered mesh is welded with the bottom panel; the bottom filtrate outlet is connected with the bottom panel; the bottom heating or freezing inlet and the bottom heating or freezing outlet are connected with the bottom panel; the oil cylinder seat is connected with the bottom barrel body; the locking flange fixing bracket is welded with the bottom barrel body; the locking flange is connected with the locking flange fixing bracket; and the locking oil cylinder is connected with the oil cylinder seat.

Preferably, the transmission mechanism is connected with the bottom assembly and located at the bottom of the six-in-one filter; and the speed reducer motor is connected with a speed reducer flange below the bottom assembly.

The bottom assembly comprises a bottom flange, a bottom barrel body, a bottom panel, a copper sleeve assembly, a gas sealing pipe, a stirring shaft sleeve, a bottom sintered mesh, a bottom filtrate outlet, a shaft sleeve sealing groove, a bottom heating or freezing inlet, a bottom heating or freezing outlet, a bottom supporting plate, a bottom reinforcing rib, a locking flange, a locking flange fixing bracket, a locking oil cylinder, an oil cylinder seat, a jacking oil cylinder and an oil cylinder connecting piece. The bottom flange is welded with the barrel body; and the gas sealing pipe is welded with the stirring shaft sleeve and the bottom panel. The bottom panel is welded with the bottom flange, the bottom reinforcing rib and the bottom sintered mesh. The bottom filtrate outlet, the bottom heating or freezing inlet and the bottom heating or freezing outlet are connected with the bottom panel. The oil cylinder seat is connected with the bottom barrel body; and the locking flange fixing bracket is welded with the bottom barrel body. The locking flange is connected with the locking flange fixing bracket; and the locking oil cylinder is connected with the oil cylinder seat.

The pressing plate assembly comprises a pressing plate flange, an upper panel of pressing plate, a lower panel of pressing plate, a concentric reducer of pressing plate, a concentric reducer panel, a sintered mesh of pressing plate, a feed port, a liquid outlet, a gas sealing port, a pressing plate sealing groove, a concentric reducer supporting plate and an upper-and-lower panel supporting plate. The pressing plate flange is welded with the upper panel of pressing plate and the lower panel of pressing plate; the gas sealing pipe is welded with the upper panel of pressing plate; the concentric reducer of pressing plate is welded with the upper panel of pressing plate; the concentric reducer panel is welded with the concentric reducer of pressing plate; and the sintered mesh of pressing plate is welded to the lower panel of pressing plate.

Preferably, the supporting frame is a bracket rotating mechanism, wherein the bracket rotating mechanism comprises a bracket, a second speed reducer, a rotating motor, a rotating mechanism, a braking system, a coupling, a bearing and a speed reducer fixing seat. The rotating mechanism is composed of a rotating shaft, a gear, a chain and a protective cover. The speed reducer fixing seat is welded with the bracket; the second speed reducer is connected with the fixing seat; and the rotating mechanism is connected with the bracket.

Preferably, the press filter adopts a nitrogen circulation airtight-drying technology or a pressure-reduced heating and drying technology; and the equipment comprises a heater, a centrifugal fan, a condenser and a receiving tank. Hot nitrogen outputted by the nitrogen heater is blown into the barrel body through the centrifugal fan to dry the materials; and a solvent brought out by the nitrogen during drying is recovered by the condenser through the sintered mesh after drying.

Preferably, one or more of gas seal, O-shaped seal, square seal, Y-shaped seal and diamond seal is adopted as the sealing ring, the pressing plate and shaft sleeve sealing groove, the shaft sleeve sealing groove and the pressing plate sealing groove. The sealing ring and the sealing groove are made of rubber, which can be nitrile butadiene rubber (NBR), ethylene propylene diene monomer (EPDM) rubber, polytetrafluoroethylene (PTEF), styrene butadiene rubber (SBR), butyl rubber, chloroprene rubber (CR), silica gel, fluorine rubber and PTEF chlorinated rubber.

Preferably, the superimposed combined press filter uses a hydraulic motor as power for pressurization.

The superimposed combined press filter comprises a shaft lifting assembly, the hydraulic motor, a first stirring shaft, a top plate, a top filter layer and an S-shaped scraper type stirrer. The shaft lifting assembly is arranged above the hydraulic motor; the hydraulic motor is connected with the first stirring shaft; the hydraulic motor is connected with the top plate by a hydraulic motor flange; and the top plate is connected with the first stirring shaft by the top sealing assembly. A top filter layer is arranged below the top plate; a sintered mesh and the S-shaped scraper type stirrer are arranged on the top filter layer; the S-shaped scraper type stirrer is connected with the first stirring shaft; and a plurality of filter layers are arranged below the top filter layer. A bottom connecting layer is arranged at the bottom of the superimposed combined press filter.

A six-in-one press filter is connected below the bottom connecting layer, and comprises a barrel body and a sealing head. A discharge port assembly, a skirt assembly and a pneumatic ball valve are arranged at a side edge of the barrel body. The skirt assembly is connected with one end of a jacking and lifting assembly; and the other end of the jacking and lifting assembly is connected with the top plate. The jacking and lifting assembly is connected with a guide column; the guide column is connected with a guide column lug; and the guide column lug is connected with the superimposed combined press filter.

A six-in-one filter layer is arranged inside the barrel body; the first stirring shaft is connected with the bottom assembly; the bottom assembly is connected with an S-shaped scraper; the pressing plate assembly is arranged above the sealing head; and a hydraulic oil cylinder is connected below the sealing head.

Preferably, the superimposed combined press filter uses fluid as power for pressurization.

The six-in-one press filter comprises a sealing head, a pressing plate assembly, a barrel body, a bottom assembly, a stirring assembly, maintenance oil cylinder assemblies and a discharge port assembly, wherein the sealing head is connected with the barrel body by a pot flange; the pressing plate assembly is arranged in the barrel body; the maintenance oil cylinder assemblies and the discharge port assembly are arranged outside the barrel body; the bottom assembly is arranged at the bottom of the barrel body; and the stirring assembly is arranged outside the bottom assembly.

A plurality of guide columns B and positioning column structures are arranged on the sealing head. The positioning column structures penetrate through the sealing head to be connected with the pressing plate. The guide columns B penetrate through the sealing head to be connected with the pressing plate. The sealing head is supported by the guide columns B and the positioning column structures so that the pressing plate operates inside the barrel body.

A pressure-bearing cavity is formed in a space between the pressing plate assembly and the sealing head. The fluid is pressurized by a pressurizing device through the guide columns B so that the pressure of the fluid is converted into the power, and thus the pressing plate assembly operates smoothly to achieve the effect of solid-liquid separation.

Preferably, the superimposed combined press filter uses a mechanical screw rod as power for pressurization.

The six-in-one press filter comprises a sealing head, a pressing plate assembly, a barrel body, a bottom assembly, a stirring assembly, maintenance oil cylinder assemblies and a discharge port assembly, wherein the sealing head is connected with the barrel body by a pot flange; the pressing plate assembly is arranged inside the barrel body; and the maintenance oil cylinder assemblies and the discharge port assembly are arranged outside the barrel body. The bottom assembly is arranged at the bottom of the barrel body; and the stirring assembly is arranged outside the bottom assembly.

A mechanical speed reducer and a mechanical screw rod are arranged on the sealing head. The mechanical speed reducer is connected with a first speed reducer; and then, the first speed reducer is connected with a first motor. A screw rod pusher is arranged between the mechanical speed reducer and the mechanical screw rod. A plurality of guide columns C are arranged on the sealing head. The mechanical screw rod penetrates through the sealing head and is connected with the pressing plate assembly; and the guide columns C penetrate through the sealing head to be connected with the pressing plate assembly, so that the mechanical screw rod and the guide columns C support the pressing plate assembly to operate smoothly.

The first motor is used as a power source for driving the mechanical screw rod after changing speed by the first speed reducer; then, the mechanical screw rod moves downwards through the mechanical speed reducer; and the force is increased to pressurize the pressing plate assembly to form pressure.

Preferably, the superimposed combined press filter uses a power device as power for pressurization.

The six-in-one press filter comprises a sealing head, a pressing plate assembly, a barrel body, a bottom assembly, a stirring assembly, maintenance oil cylinder assemblies and a discharge port assembly. The sealing head is connected with the barrel body through flanges; the pressing plate assembly is arranged inside the barrel body; and the maintenance oil cylinder assemblies and the discharge port assembly are arranged outside the barrel body. The bottom assembly is arranged at the bottom of the barrel body; and a stirring assembly is arranged outside the bottom assembly.

Guide columns D are arranged on the sealing head, and penetrate through the sealing head to be connected with the pressing plate assembly. The press filter is also provided with a plurality of power devices. The guide columns D and the plurality of power devices support the pressing plate assembly to operate in parallel, so that the power devices drive the pressing plate assembly to move up and down to form pressure.

The present invention has the beneficial effects as follows.
1. Centrifuges are replaced.
2. A multilayer superposition form is used for the first time to greatly increase the filtering area, thereby greatly improving the filtering effect.
3. The superimposed filter is fully enclosed and sealed to eliminate the overflow of various toxic drying gases and reduce the environmental pollution.
4. Y-shaped silicone rubber and fluorine rubber gas sealing ring is adopted to realize good airtightness, no odor overflow and no leakage phenomenon.
5. Meshes are sintered on multiple layers of cavities up and down to realize large filtering area, quick filtration and short production cycle.
6. S-shaped scraper type stirrer are adopted for automatic discharging.
7. The superimposed combined press filter can be applied to the press-filtering of solid-liquid separation, activated carbon separation and other media in medicine, chemical industry, coatings, pesticides, dyes, sludge, petroleum, paper making and the like, and has the filtering precision of 0.1 µm-300 µm.
8. Flat bottom design is adopted in the superimposed filter to reduce the washing solvent and save costs.

The above description is only an overview of the technical solutions of the present invention. To understand the technical means of the present invention more clearly and implement according to the contents of the description, the technical solutions will be illustrated in detail with the preferred embodiments of the present invention in combination with the accompanying drawings.

### Description of Drawings

Fig. 1 is a structural schematic diagram of the present invention;
Fig. 2 is a structural schematic diagram of laminates of a superimposed press filter plate according to the present invention;
Fig. 3 is an enlarged view of a joint between the superimposed press filter and a six-in-one press filter according to the present invention;
Figs. 4 and 5 are structural schematic diagrams of a first embodiment of the six-in-one press filter according to the present invention;
Fig. 6 is a structural schematic diagram of a second embodiment of the six-in-one press filter according to the present invention;
Fig. 7 is a structural schematic diagram of a sealing head of the six-in-one press filter according to the present invention;
Fig. 8 is a structural schematic diagram of a discharge port assembly of the six-in-one press filter according to the present invention;
Fig. 9 is a structural schematic diagram of a pressing plate assembly in the first embodiment of the six-in-one press filter according to the present invention;
Fig. 10 is a structural schematic diagram of a pressing plate assembly in the second embodiment of the six-in-one press filter according to the present invention;
Figs. 11 and 12 are structural schematic diagrams of a bottom assembly in the second embodiment of the six-in-one press filter according to the present invention;
Fig. 13 is a structural schematic diagram of a superimposed combined press filter according to a third embodiment of the present invention;
Fig. 14 is a structural schematic diagram of a six-in-one press filter according to a fourth embodiment of the present invention;
Fig. 15 is a structural schematic diagram of a six-in-one press filter according to a fifth embodiment of the present invention; and
Fig. 16 is a structural schematic diagram of a six-in-one press filter according to a sixth embodiment of the present invention.

In the figures, superimposed filter: 1 top plate, 2 laminate, 3 bottom plate, 4 sintered mesh, 5 first stirring shaft, 6 speed reducer, 7 motor, 8 S-shaped scraper type stirrer, 9 feed port, 10 solid discharge port, 11 filtrate outlet and 12 knife valve;
23 shaft lifting assembly, 24 hydraulic motor, 25 top sealing assembly, 26 hydraulic motor flange, 27 top filter layer, 28 filter layer, 29 bottom connecting layer, 30 guide column A and 31 guide column lug;
laminate: 2-1 diversion groove, 2-2 mesh plates and 2-3 sight glasses;
six-in-one filter: 13 sealing head, 14 barrel body, 15 transmission mechanism, 16 material pressing oil cylinder assembly, 17 pressing plate assembly, 18 bottom assembly, 19 supporting leg, 20 feed port, 21 hydraulic oil cylinder and 22 jacking and lifting assembly;
32 maintenance oil cylinder assemblies, 33 stirring assembly, 34 guide column B, 341 first guide column B, 342 second guide column B, 343 third guide column B, 344 fourth guide column B, 35 positioning column structure, 351 positioning column, 352 positioning column sleeve, 36 pot body flange, 37 jacket assembly, 371 cold and hot media inlet of jacket, 372 cold and hot media outlet of jacket, 38 bottom cold and hot media inlet and 39 bottom cold and hot media outlet;
40 mechanical speed reducer, 41 mechanical screw rod, 411 movable device, 42 first speed reducer, 43 first motor, 44 guide column C, 441 first guide column C, 442 second guide column C, 443 third guide column C and 444 fourth guide column C;
45 power device, 46 guide column D, 461 guide shaft sleeve, 462 guide column flange, 47 mounting seat, 48 connecting piece, 321 oil cylinder, 322 upper connecting seat of oil cylinder, 323 oil cylinder connecting piece and 324 lower connecting seat of oil cylinder;
20-1 flange, 20-2 sealing gasket and 20-3 intermediate valve;
sealing head: 13-1 feed port, 13-2 cleaning port, 13-3 liquid outlet, 13-4 vent port, 13-5 pressure relief valve, 13-6 pressure gauge, 13-7 gas sealing port, 13-8 access port, 13-9 pressing plate heating or freezing inlet, 13-10 pressing plate heating or freezing outlet, 13-11 upper bracket of jacking oil cylinder and 13-12 discharge port assembly;
discharge port assembly: 13-121 guide column, 13-122 discharge oil cylinder, 13-123 oil cylinder fixing plate, 13-124 fastening screw rod, 13-125 welding seat, 13-126 discharge port sealing plate, 13-127 discharge port inner pump;
barrel body: 14-1 jacket, 14-2 jacket heating or freezing inlet, 14-3 jacket heating or freezing outlet and 14-4 lower bracket of jacking oil cylinder; 14-5 six-in-one filter layer, 14-6 skirt assembly and 14-7 pneumatic ball valve;
transmission mechanism: 15-1 speed reducer motor, 15-2 explosion-proof motor, 15-3 stirring shaft, 15-4 S-shaped scraper, 15-5 shaft-lifting upper panel, 15-6 shaft-lifting lower panel and 15-7 shaft-lifting oil cylinder;
material pressing oil cylinder assembly: 16-1 material pressing oil cylinder, 16-2 material pressing oil cylinder tailstock;
pressing plate assembly: 17-1 pressing plate flange, 17-2 upper panel of pressing plate, 17-3 lower panel of pressing plate, 17-4 concentric reducer of pressing plate, 17-5 concentric reducer panel, 17-6 sintered mesh of pressing plate, 17-7 feed port, 17-8 liquid outlet, 17-9 copper sleeve assembly, 17-10 stirring shaft sleeve, 17-11 gas sealing pipe, 17-12 gas sealing port, 17-13 concentric reducer supporting plate, 17-14 upper-and-lower panel supporting plate of pressing plate, 17-15 Y-shaped fluorine rubber ring (shaft), 17-16 Y-shaped fluorine rubber ring (pressing plate) and 17-18 O-shaped sealing ring; and
bottom assembly: 18-1 bottom flange, 18-2 bottom barrel body, 18-3 bottom panel, 18-4 copper sleeve assembly, 18-5 gas sealing pipe, 18-6 stirring shaft sleeve, 18-7 bottom sintered mesh, 18-8 bottom filtrate outlet, 18-9 O-shaped sealing ring (shaft), 18-10 bottom heating or freezing inlet, 18-11 bottom heating or freezing outlet, 18-12 bottom supporting plate, 18-13 bottom reinforcing rib, 18-14 locking flange, 18-15 locking flange fixing bracket, 18-16 jacking oil cylinder, 18-17 locking oil cylinder, 18-18 Y-shaped fluorine rubber ring (shaft) and 18-19 speed reducer flange.

### Detailed Description

To make the purposes, technical solutions and advantages of the present invention clearer, the present invention will be further described in detail below in combination with the accompanying drawings. In the description of embodiments of the present invention, it should also be noted that, unless otherwise clearly defined and limited, if the terms "arrangement" and "connection" appear, they should be interpreted broadly. For example, "connection" may refer to fixed connection, detachable connection or integral connection, may also refer to mechanical connection or electrical connection, and may also refer to direct connection, indirect connection through an intermediate medium or internal communication between two components. Those ordinary skilled in the art can understand the specific meaning of the above terms in the present invention according to specific situations. It should be understood that the specific embodiments described herein are only used to explain the present invention, rather than limit the present invention.

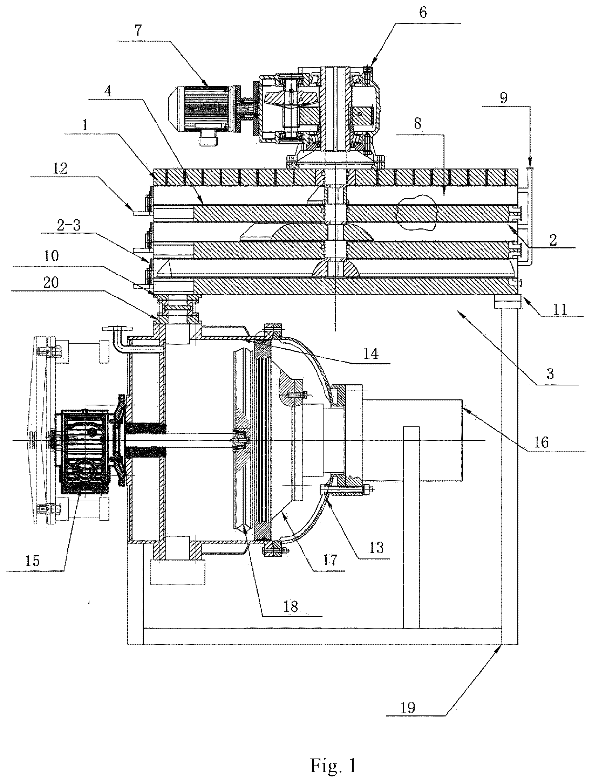

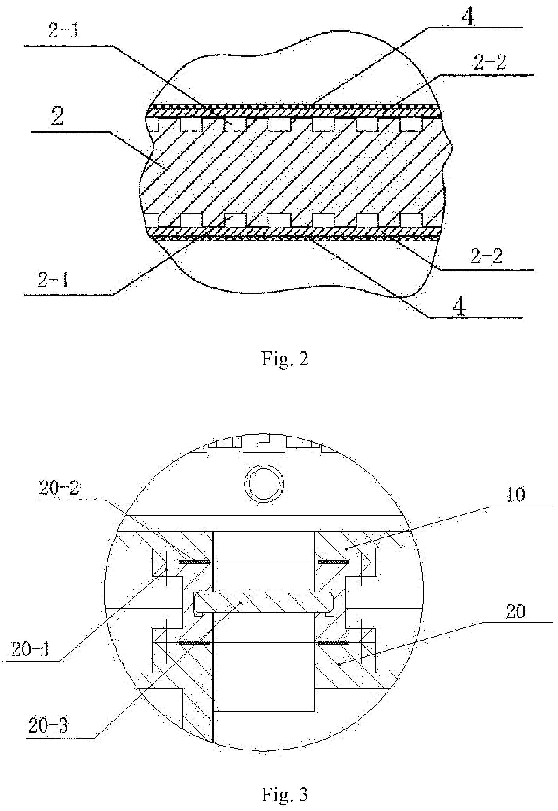

As shown in Figs. 1, 2 and 3, the present invention provides a superimposed combined press filter, which comprises a superimposed filter and a six-in-one press filter, wherein a solid discharge port 10 of the superimposed filter is connected with a feed port 20 of the six-in-one press filter by a flange 20-1; a sealing gasket 20-2 is arranged at a joint between the solid discharge port 10 and the feed port 20; the two ports are closed and opened by an intermediate valve 20-3; and the flange 20-1 is connected by a sealing gasket and screws. The superimposed filter is used for performing primary filtration on materials to be filter-pressed and then conveying the obtained solids to the six-in-one press filter; and the six-in-one press filter is used for performing secondary filtration on the solids.

The superimposed filter is composed of a top plate 1, laminates 2, a bottom plate 3, layer connecting flanges, a sintered mesh 4, a first stirring shaft 5, a speed reducer 6, a motor 7, S-shaped scraper type stirrers 8, a feed port 9 and a solid discharge port 10. The motor 7 is connected with the speed reducer 6 by a flange.

Multiple layers of laminates 2 may be provided, and are connected and locked by the layer connecting flanges. Layer cavities are formed between the laminates 2. Two layers of sintered meshes 4 are configured in each layer cavity. Diversion grooves 2-1 are formed in the laminates at opposite sides of the sintered meshes 4; and filtrate outlets 11 and sight glasses 2-3 are arranged on the side edges of the laminates. Filtrate flows into hollow spaces between the laminates through the diversion grooves 2-1, and then flows out from the filtrate outlets 11 of the laminates. A pneumatic or hydraulic knife valve discharge port 10 is formed in each layer; and a knife valve 12 is arranged at the discharge port 10, and can open and close the discharge port. Filter plates are integrated above the laminates 2; and mesh plates 2-2 are arranged on the laminates 2.

The discharge port 10 of each laminate is connected with the knife valve 12 in advance by a hydraulically propped sealing surface. During stirring, the knife valve 12 is closed and hydraulically propped against the sealing surface of each laminate 2. During discharging, the knife valve 12 is opened and separated from each laminate 2.

The superimposed filter starts to filter when the materials are pressurized and conveyed to equipment by a pump. After filtration, the motor 7 is used as a power source; the first stirring shaft of the superimposed filter is connected with the motor 7 through the speed reducer 6; and three S-shaped scraper type stirrers 8 are mounted on the shaft. The three S-shaped scraper type stirrers 8 drive the power of the motor 7 to the shaft after changing speed by the speed reducer 6; and the shaft drives the S-shaped scraper type stirrers 8 to discharge materials from the discharge port 10 of the pneumatic or hydraulic knife valve.

The six-in-one press filter comprises a sealing head 13, a barrel body 14, a transmission mechanism 15, a material pressing oil cylinder assembly 16, a pressing plate assembly 17, a bottom assembly 18 and a supporting leg 19.

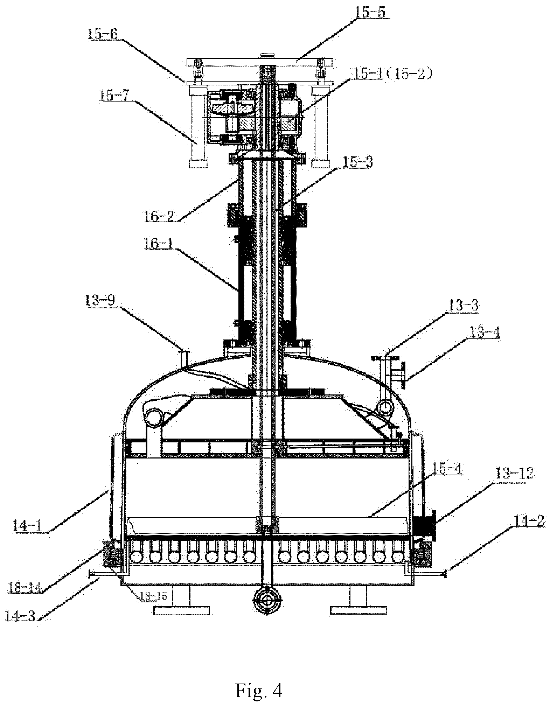

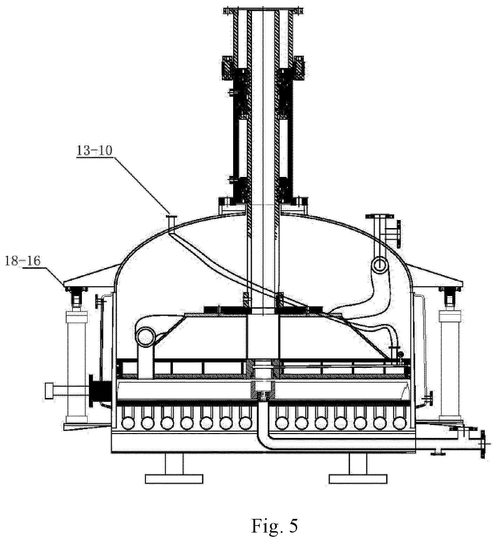

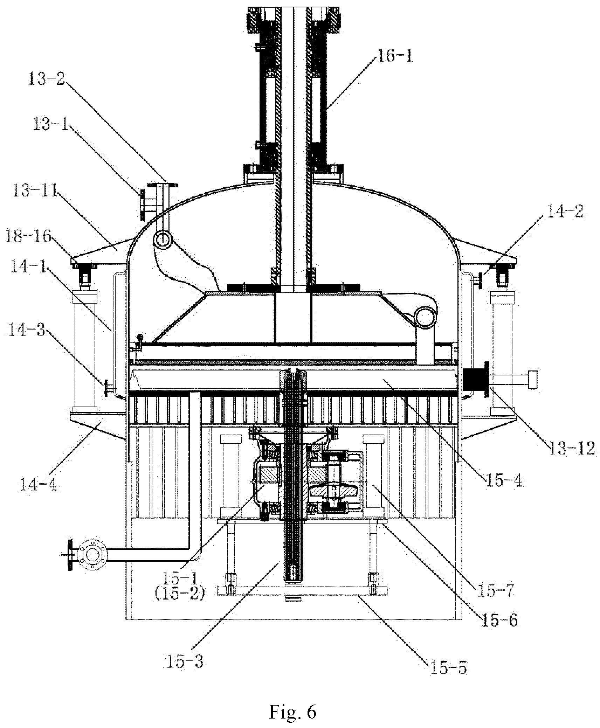

As shown in Figs. 4, 5 and 6, the sealing head 13 is connected to the barrel body 14, is welded or connected by bolts by a flange; an oil cylinder seat is welded at the top of the sealing head 13; and the material pressing oil cylinder assembly 16 and the oil cylinder seat are connected to the sealing head 13. The pressing plate assembly 17 is arranged inside the barrel body 14 and connected with the material pressing oil cylinder assembly 16. The bottom assembly is located below the barrel body 14 and welded with the barrel body 14. The feed port 20 connected with the superimposed filter is formed in the barrel body 14.

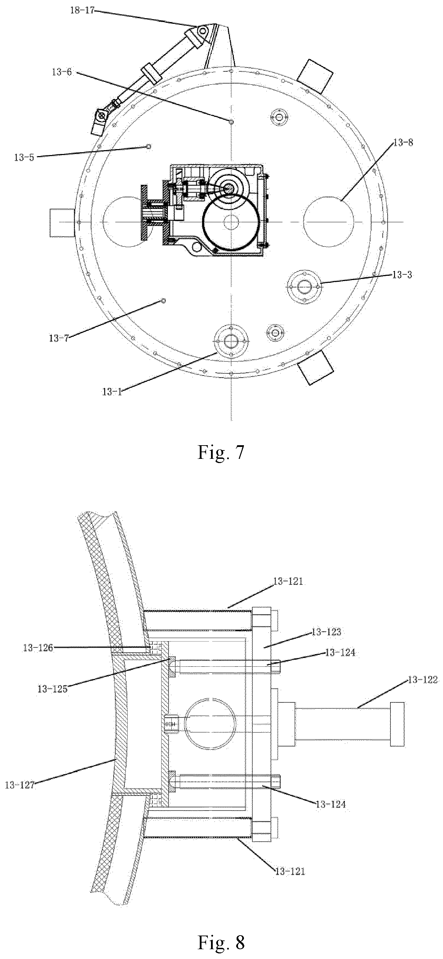

As shown in Fig. 7, a feed port 13-1 and a cleaning port 13-2 are formed at one end of the sealing head 13; and a liquid outlet 13-3 and a vent port 13-4 are formed at the other end. A pressure relief valve 13-5, a pressure gauge 13-6, a viewing port, a gas sealing port 13-7, access ports 13-8, a pressing plate heating or freezing inlet 13-9 and a pressing plate heating or freezing outlet 13-10 are also provided. Upper brackets 13-11 of jacking oil cylinder are arranged at two opposite sides of the sealing head 13.

The barrel body 14 is provided with a barrel flange, a skirt edge and a temperature measuring tube, wherein the barrel flange is welded with the barrel body. Jackets 14-1 and lower brackets 14-4 of jacking oil cylinder are welded at two opposite sides of the barrel body; the jacket 14-1 at one side is provided with a jacket heating or freezing inlet 14-2; and the jacket at the other side is provided with a jacket heating or freezing outlet 14-3. The discharge port assembly 13-12 is arranged outside the barrel body 14 and is welded with the barrel body 14.

As shown in Fig. 8, the discharge port assembly 13-12 comprises guide columns 13-121, a discharge oil cylinder 13-122, an oil cylinder fixing plate 13-123, fastening screw rods 13-124, a welded seat 13-125, a discharge port sealing plate 13-126 and a discharge port inner pump 13-127. Two guide columns 13-121 are provided. One end of each guide column is welded with the barrel body 14; the other end of each guide column is connected with the oil cylinder fixing plate 13-123; and the oil cylinder fixing plate 13-123 is connected with the discharging oil cylinder 13-122. Two fastening screw rods 13-124 are arranged between the guide columns 13-121. One end of each fastening screw rod is connected with the oil cylinder fixing plate 13-123; the other end of each fastening screw rod is connected with the welded seat 13-125; the welded seat 13-125 is connected with the discharge port inner pump 13-127; a sealing ring is mounted on the barrel body 14; and the discharge port inner pump 13-127 is pushed by the discharge oil cylinder 13-122 to be sealed by the sealing ring of the barrel body 14.

The transmission mechanism 15 comprises a speed reducer motor 15-1, an explosion-proof motor 15-2, a stirring shaft 15-3, an S-shaped scraper 15-4, a shaft-lifting upper panel 15-5, a shaft-lifting lower panel 15-6 and a shaft-lifting oil cylinder 15-7. The explosion-proof motor 15-2 is connected with the speed reducer motor 15-1; the speed reducer motor 15-1 is connected with the stirring shaft 15-3; one end of the stirring shaft 15-3 is connected with the S-shaped scraper 15-4; and the other end of the stirring shaft is connected with the shaft-lifting upper panel 15-5. The shaft-lifting lower panel 15-6 is connected with the speed reducer motor 15-1; and the shaft-lifting oil cylinder 15-7 is connected with the shaft-lifting upper panel 15-5 and the shaft-lifting lower panel 15-6 through flanges. The S-shaped scraper 15-4 is provided with a shaft sleeve and is connected with the stirring shaft 15-3 through the shaft sleeve; and a cross section of the S-shaped scraper 15-4 is rhombic.

The material pressing oil cylinder assembly 16 comprises a material pressing oil cylinder 16-1, a material pressing oil cylinder tailstock 16-2 and a hydraulic power station of oil cylinder. The hydraulic power station of oil cylinder is composed of an explosion-proof motor, an electromagnetic switch valve, a gear pump, hydraulic oil and a hydraulic oil pipe. The material pressing oil cylinder 16-1 is connected with an oil cylinder seat; and the hydraulic power station is connected with oil pipes by oil pipes.

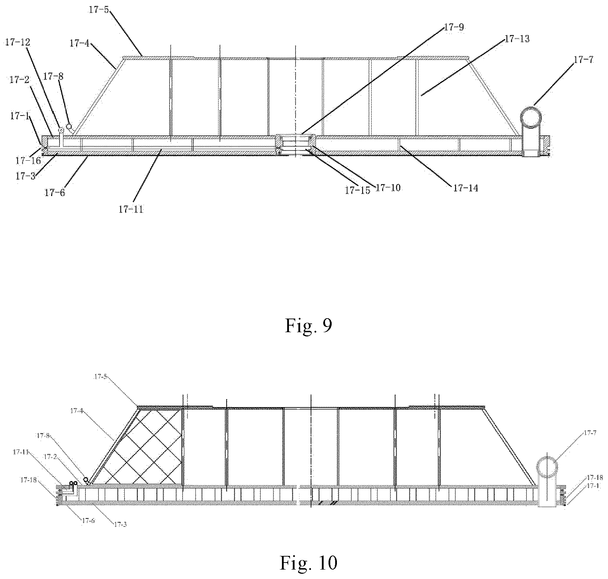

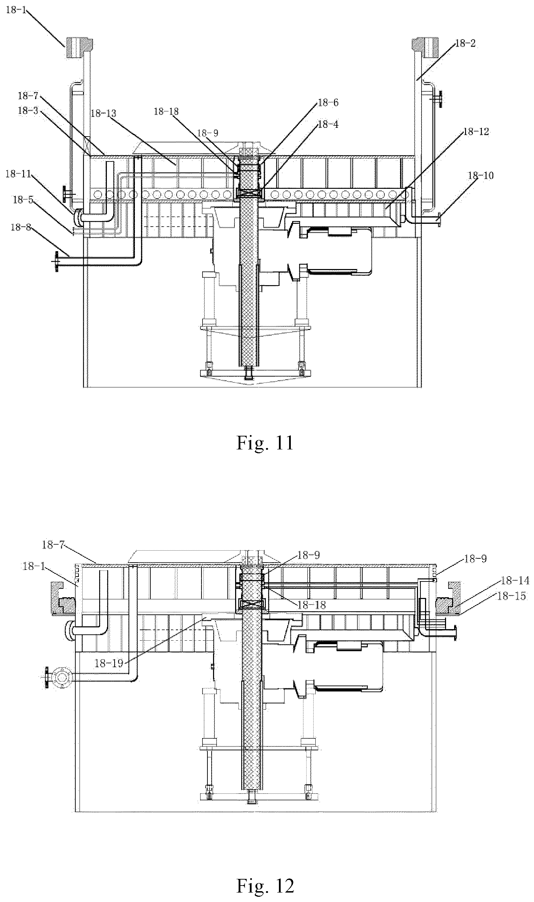

As shown in Figs 9 to 12;

In a first embodiment, the transmission mechanism 15 is connected with the material pressing oil cylinder assembly 16 and located at the top of the six-in-one press filter; and the speed reducer is connected with the material pressing oil cylinder tailstock 16-2.

The pressing plate assembly 17 comprises a pressing plate flange 17-1, an upper panel 17-2 of pressing plate, a lower panel 17-3 of pressing plate, a concentric reducer 17-4 of pressing plate, a concentric reducer panel 17-5, a sintered mesh 17-6 of pressing plate, a feed port 17-7, a liquid outlet 17-8, a copper sleeve assembly 17-9, a stirring shaft sleeve 17-10, a gas sealing pipe 17-11, a gas sealing port 17-12, a pressing plate and shaft sleeve sealing groove, a concentric reducer supporting plate 17-13 and an upper-and-lower panel supporting plate 17-14 of pressing plate. The pressing plate flange 17-1 is welded with the upper panel 17-2 of pressing plate and the lower panel 17-3 of pressing plate. The concentric reducer 17-4 of pressing plate is welded with the upper panel 17-2 of pressing plate. The concentric reducer panel 17-5 is welded with the concentric reducer 17-4 of pressing plate. The sintered mesh 17-6 of pressing plate is welded to the lower panel 17-3 of pressing plate. The gas sealing pipe 17-11 is welded with the pressing plate flange 17-1, the stirring shaft sleeve 17-10 and the upper panel 17-2 of pressing plate. The stirring shaft sleeve 17-10 is welded with the upper panel of pressing plate and the lower panel of pressing plate.

The bottom assembly comprises a bottom flange, a bottom barrel body, a bottom panel, a bottom sintered mesh, a bottom filtrate outlet, a bottom heating or freezing inlet, a bottom heating or freezing outlet, a bottom supporting plate, a bottom reinforcing rib, a locking flange, a locking flange fixing bracket, a locking oil cylinder, an oil cylinder seat, a jacking oil cylinder, an oil cylinder connecting piece and a gas sealing pipe. The bottom flange is welded with the barrel body; the bottom panel is welded with flanges and reinforcing ribs; the bottom sintered mesh is welded with the bottom panel; the bottom filtrate outlet is connected with the bottom panel; the bottom heating or freezing inlet and the bottom heating or freezing outlet are connected with the bottom panel; the oil cylinder seat is connected with the bottom barrel body; the locking flange fixing bracket is welded with the bottom barrel body; the locking flange is connected with the locking flange fixing bracket; and the locking oil cylinder is connected with the oil cylinder seat.

In the present embodiment, the material pressing oil cylinder seat is fixed at an upper part of the sealing head, and drives the pressing plate assembly to move up and down to extrude the materials, thereby filtering the materials. The stirring shaft penetrates through the material pressing oil cylinder assembly and then is connected with the speed reducer motor; and the explosion-proof motor is mounted on the speed reducer as a driver. The stirring shaft moves up and down in the barrel body through the shaft-lifting oil cylinder, to achieve the best washing and automatic discharging of the materials, so that stirring and extrusion do not interfere with each other.

In a second embodiment, the transmission mechanism 15 is connected with the bottom assembly 18 and located at the bottom of the six-in-one filter; and the speed reducer motor is connected with a speed reducer flange 18-19 below the bottom assembly 18.

The pressing plate assembly 17 comprises a pressing plate flange 17-1, an upper panel 17-2 of pressing plate, a lower panel 17-3 of pressing plate, a concentric reducer 17-4 of pressing plate, a concentric reducer panel 17-5, a sintered mesh 17-6 of pressing plate, a feed port 17-7, a liquid outlet 17-8, a gas sealing port 17-12, a pressing plate sealing groove, a concentric reducer supporting plate 17-13 and an upper-and-lower panel supporting plate 17-14. The pressing plate flange 17-1 is welded with the upper panel 17-2 of pressing plate and the lower panel 17-3 of pressing plate; the gas sealing port 17-12 is welded with the upper panel 17-2 of pressing plate; the concentric reducer 17-4 of pressing plate is welded with the upper panel 17-2 of pressing plate; the concentric reducer panel 17-5 is welded with the concentric reducer 17-4 of pressing plate; and the sintered mesh 17-6 of pressing plate is welded to the lower panel 17-3 of pressing plate.

The bottom assembly 18 comprises a bottom flange 18-1, a bottom barrel body 18-2, a bottom panel 18-3, a copper sleeve assembly 18-4, a gas sealing pipe 18-5, a stirring shaft sleeve 18-6, a bottom sintered mesh 18-7, a bottom filtrate outlet 18-8, a shaft sleeve sealing groove, a bottom heating or freezing inlet 18-10, a bottom heating or freezing outlet 18-11, a bottom supporting plate 18-12, a bottom reinforcing rib 18-13, a locking flange 18-14, a locking flange fixing bracket 18-15, a locking oil cylinder 18-17, an oil cylinder seat, a jacking oil cylinder 18-16 and an oil cylinder connecting piece. The bottom flange 18-1 is welded with the barrel body 14; and the gas sealing pipe 18-5 is welded with the stirring shaft sleeve 18-6 and the bottom panel 18-3. The bottom panel 18-3 is welded with the bottom flange 18-1, the bottom reinforcing rib 18-13 and the bottom sintered mesh 18-7. The bottom filtrate outlet 18-8, the bottom heating or freezing inlet 18-10 and the bottom heating or freezing outlet 18-11 are connected with the bottom panel 18-3. The oil cylinder seat is connected with the bottom barrel body 18-2; and the locking flange fixing bracket 18-15 is welded with the bottom barrel body 18-2. The locking flange 18-14 is connected with the locking flange fixing bracket 18-15; and the locking oil cylinder 18-17 is connected with the oil cylinder seat.

In the present embodiment, the stirring and the speed reducer are all located at the bottom, which will shorten the stirring shaft and improve the stability. Stirring and material pressing are carried out at the top and the bottom respectively.

The supporting leg of the six-in-one filter can be a bracket rotating mechanism, wherein the bracket rotating mechanism comprises a bracket, a second speed reducer, a rotating motor, a rotating mechanism, a braking system, a coupling, a bearing and a speed reducer fixing seat. The rotating mechanism is composed of a rotating shaft, a gear, a chain and a protective cover. The speed reducer fixing seat is welded with the bracket; the second speed reducer is connected with the speed reducer fixing seat; and the rotating mechanism is connected with the bracket.

For the six-in-one filter in the present embodiment, a single oil cylinder is used for press-filtering; and for the material pressing oil cylinder, the first design technology of non-standard hollow shaft hydraulic cylinder is adopted to transmit hydraulic pressure to the pressing plate assembly to directly extrude materials up and down, thereby extruding and filtering the materials in the barrel body.

The hydraulic power station uses the explosion-proof motor as power; and an explosion-proof electromagnetic valve works as the electromagnetic switch valve. Multiple groups of control valves and pressure reducing valves are configured to realize multiple groups of different control pressures without mutual interference. The solids obtained by press-filtering are directly discharged to a gear rotating crusher after being stirred by the S-shaped scraper; and the dried materials are crushed

The press filter in the present embodiment adopts a nitrogen circulation airtight-drying technology; and the equipment comprises a heater, a centrifugal fan, a condenser and a receiving tank. Hot nitrogen outputted by the nitrogen heater is blown into the barrel body through the centrifugal fan to dry the materials; and a solvent brought out by the nitrogen during drying is recovered by the condenser through the sintered mesh after drying.

One or more of gas seal, O-shaped seal, square seal, Y-shaped seal and diamond seal is adopted as the sealing ring, the pressing plate and shaft sleeve sealing groove in the present embodiment, the shaft sleeve sealing groove and the pressing plate sealing groove. The sealing ring and the sealing groove are made of rubber, which can be nitrile butadiene rubber (NBR), ethylene propylene diene monomer (EPDM) rubber, polytetrafluoroethylene (PTEF), styrene butadiene rubber (SBR), butyl rubber, chloroprene rubber (CR), silica gel, fluorine rubber and PTEF chlorinated rubber.

Operating instructions of the present embodiment:
1. A gas source feeding pipe is connected; the pressure relief valve pipeline should be connected to a safe place to prevent the pressure relief valve from being opened to spray and hurt people; and a discharge port of a reactor is connected with the feed port of the superimposed filter.
2. The knife valve at the discharge port must be closed before feeding. The materials are transported into the cavity by using a diaphragm pump as power. When the materials enter the cavity, the filtrate continuously flows out from the sintered mesh of the filter plate and is discharged through the liquid outlet. After all the materials enter the cavity, the valve at the feed port is closed, and the valve at the liquid outlet of the filter plate is closed, so that the filtrate is discharged through the liquid outlet of a lower filter plate by pressurization, thereby completing filtration.
3. Pressurizing equipment is turned off; a vent valve is opened so that a pointer of the pressure gauge in the cavity points at 0; and the discharge knife valve is opened after ensuring no pressure in the cavity. The stirring motor is turned on so that the materials are dispersed by the S-shaped scraper type stirrers for discharging.
4. When all the materials of the superimposed filter enter the six-in-one press filter, a liquid inlet valve is closed; and the oil cylinder is started for press-filtering until no filtrate flows out from the liquid outlet.
5. A rinsing solvent is added; and the stirring motor is started until the materials reach a uniform rinsing effect.
6. After rinsing, the oil cylinder is started to press the rinsing liquid out through the sintered mesh until no liquid.
7. The material pressing oil cylinder is turned off. The vent valve is opened to completely exhaust the gas in a pot, so that the pointer of the pressure gauge in the pot points at 0; and the discharge valve is opened after ensuring no pressure in the pot. An upper stirring oil cylinder and a lower stirring oil cylinder are turned on; and the stirring motor is started to disperse the pressed dry materials with a scraper.
8. No pressure in the pot is ensured. A nitrogen heater and a condenser are turned on to rise the temperature to a specified temperature. A nitrogen circulation fan is turned on to blow nitrogen gas into the pot. The processes are sequentially circulated to achieve the drying effect. The nitrogen gas is reheated and recycled after recovering the solvent by the condenser, so that the nitrogen gas does not lose smell and does not leave the pot. The drying is stopped after the materials are qualified in the test.
9. The discharge valve is opened. The upper stirring oil cylinder and the lower stirring oil cylinder are turned on; the stirring motor is started to scrape the pressed dry materials out from the solid discharge port from top to bottom with the scraper. The obtained materials enter the gear rotating crusher for crushing.
10. In actual operation, a material pressing switch must be adjusted so that a material pressing plate in the filter is located at an upper reset position after each operation.

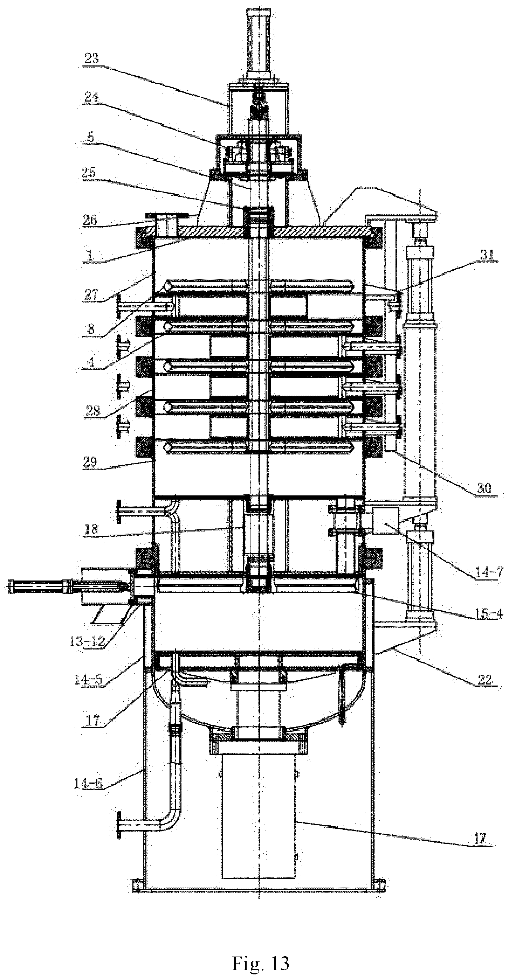

In a third embodiment, as shown in Fig. 13, a hydraulic motor is used as power for pressurization in the present invention. The superimposed combined press filter comprises a shaft lifting assembly 23, the hydraulic motor 24, a first stirring shaft 5, a top plate 1, a top filter layer 27 and an S-shaped scraper type stirrer 8. The shaft lifting assembly 23 is arranged above the hydraulic motor 24; the hydraulic motor 24 is connected with the first stirring shaft 5; the hydraulic motor 24 is connected with the top plate 1 by a hydraulic motor flange 26; and the top plate 1 is connected with the first stirring shaft 5 by the top sealing assembly 25. A top filter layer 27 is arranged below the top plate 1; a sintered mesh 4 and the S-shaped scraper type stirrer 8 are arranged on the top filter layer 27; the S-shaped scraper type stirrer 8 is connected with the first stirring shaft 5; and a plurality of filter layers 28 are arranged below the top filter layer 27. A bottom connecting layer 29 is arranged at the bottom of the superimposed combined press filter.

A six-in-one press filter is connected below the bottom connecting layer 29, and comprises a barrel body 14 and a sealing head 13. A discharge port assembly 13-12, a skirt assembly 14-6 and a pneumatic ball valve 14-7 are arranged at a side edge of the barrel body 14. The skirt assembly 14-6 is connected with one end of a jacking and lifting assembly 22; and the other end of the jacking and lifting assembly 22 is connected with the top plate 1. The jacking and lifting assembly 22 is connected with a guide column A 30; the guide column A 30 is connected with a guide column lug 31; and the guide column lug 31 is connected with the superimposed combined press filter. A six-in-one filter layer 14-5 is arranged inside the barrel body 14; the first stirring shaft 5 is connected with the bottom assembly 18; the bottom assembly 18 is connected with an S-shaped scraper 15-4; the pressing plate assembly 17 is arranged above the sealing head 13; and a hydraulic oil cylinder 21 is connected below the sealing head 13.

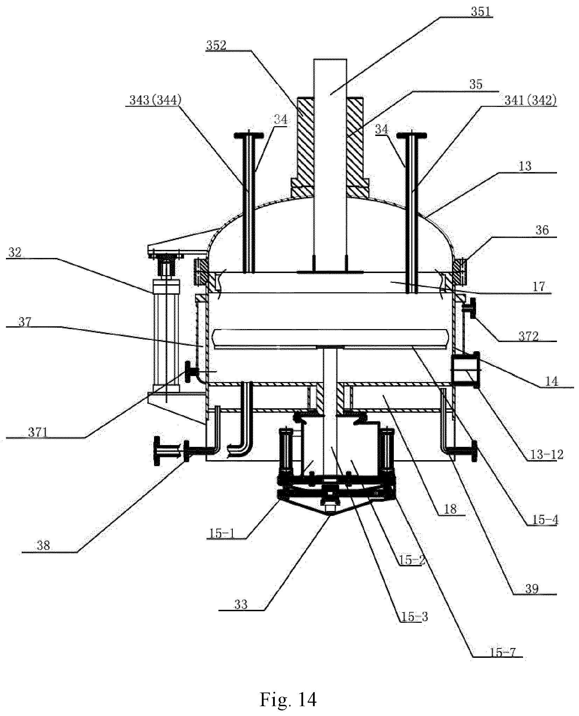

In a fourth embodiment, as shown in Fig. 14, fluid is used as power for pressurization in the present invention. The six-in-one press filter comprises a sealing head 13, a pressing plate assembly 17, a barrel body 14, a bottom assembly 18, a stirring assembly 33, maintenance oil cylinder assemblies 32 and a discharge port assembly 13-12; the sealing head 13 is connected with the barrel body 14 by a pot flange 36; the pressing plate assembly 17 is arranged in the barrel body 14; the maintenance oil cylinder assemblies 32 and the discharge port assembly 13-12 are arranged outside the barrel body 14; the bottom assembly 18 is arranged at the bottom of the barrel body 14; and the stirring assembly 33 is arranged outside the bottom assembly 18. Three groups of maintenance oil cylinder assemblies 32 are provided.

Four guide columns B 34 and positioning column structures 35 are arranged on the sealing head 13. The guide columns B 34 are of a hollow structure. A first guide columns B 341 is a material feed port; a second guide columns B 342 is a filtrate outlet; a third guide columns B 343 is a fluid inlet; and a fourth guide columns B 344 is an airtight gas inlet in the pressing plate. The positioning column structures 35 penetrate through the sealing head 13 to be connected with the pressing plate assembly 17. The guide columns B 34 penetrate through the sealing head 13 to be connected with the pressing plate assembly 17. The sealing head 13 is supported by the guide columns B 34 and the positioning column structures 35 so that the pressing plate assembly 17 operates inside the barrel body 14.

Guide column connecting pieces are arranged on the guide columns B 34. Each guide column B 34 is provided with a sealing seat on the sealing head 13. A guide column sealing piece is arranged at a position of each guide column B 34 corresponding to the sealing seat, and may be a Y-shaped gas sealing ring and an O-shaped sealing ring.

Each positioning column structure 35 comprises a positioning column 351 and a positioning column sleeve 352; the positioning column 351 is sleeved with the positioning column sleeve 352; and the positioning column 351 is provided with a sealing seat on the sealing head 13. A positioning column sealing piece is arranged at a position of the positioning column 351 corresponding to the sealing seat, and may be a Y-shaped gas sealing ring and an O-shaped sealing ring.

The bottom assembly 18 is arranged at the bottom of the barrel body 14; and a pressure-bearing cavity is formed in a space between the pressing plate assembly 17 and the sealing head 13. The fluid is pressurized by a pressurizing device through the guide columns 34 so that the pressure of the fluid is converted into the power, and thus the pressing plate assembly 17 operates smoothly to achieve the effect of solid-liquid separation.

The fluid pressurizing device may be a liquid boosting pump, a compressed container and other devices capable of pressurizing; and the fluid is reusable. The equipment is equipped with a storage tank for storing the fluid. When the pressing plate assembly 17 is required to go down, the fluid in the storage tank will be conveyed into the pressure-bearing cavity through the boosting pump. When the pressing plate assembly 17 is required to go up, other fluids will be conveyed into the press filter so that the pressing plate assembly 17 can go up and convey the fluid back to the storage tank.

Jacket assemblies 37 are arranged outside the barrel body 13; and each jacket assembly 37 comprises an upper sealing plate of jacket, an annular plate of jacket, a lower sealing plate of jacket and a group of cold and hot media ports. The jacket assemblies 37 are used for heat preservation and heating or cooling; and the heat preservation material can be aluminum silicate heat preservation cotton, polyurethane foam and the like. The cold and hot media ports are arranged oppositely, up and down and correspondingly; and hot or cold media can be added to the jacket for heating or cooling. The jacket assemblies 37 are divided into two groups, wherein one group is provided with cold and hot media inlets 371 of jacket and the other group is provided with cold and hot media outlets 372 of jacket.

A group of bottom cold and hot media ports are formed in the bottom assembly 18, and comprise bottom cold and hot media inlets 38 and bottom cold and hot media outlets 39. The filter plate and the filter mesh are arranged at the bottom of the pressing plate assembly 17; and the filter plate and the filter mesh are arranged at a top surface of the bottom assembly 18.

The stirring assembly outside the bottom of the bottom assembly 18 comprises a speed reducer motor, an explosion-proof motor, a shaft-lifting oil cylinder and an S-shaped scraper. The speed reducer motor is connected with the explosion-proof motor and the stirring shaft; one end of the stirring shaft is connected with the S-shaped scraper, while the other end is connected with the shaft-lifting upper panel. The shaft-lifting lower panel is connected with the speed reducer motor; and the shaft-lifting oil cylinder is connected with the shaft-lifting upper panel and the shaft-lifting lower panel by the flanges.

Each maintenance oil cylinder assembly 32 comprises an upper connecting seat of oil cylinder, an oil cylinder connecting piece, an oil cylinder and a lower connecting seat of oil cylinder, wherein the upper connecting seat of oil cylinder is connected with the sealing head 13; the lower connecting seat of oil cylinder is connected with the barrel body 14; and three groups of maintenance oil cylinder assemblies 32 are provided. When the maintenance cylinder assemblies 32 operate, the oil cylinder is pressurized to open the sealing head 13 and open an internal maintenance space.

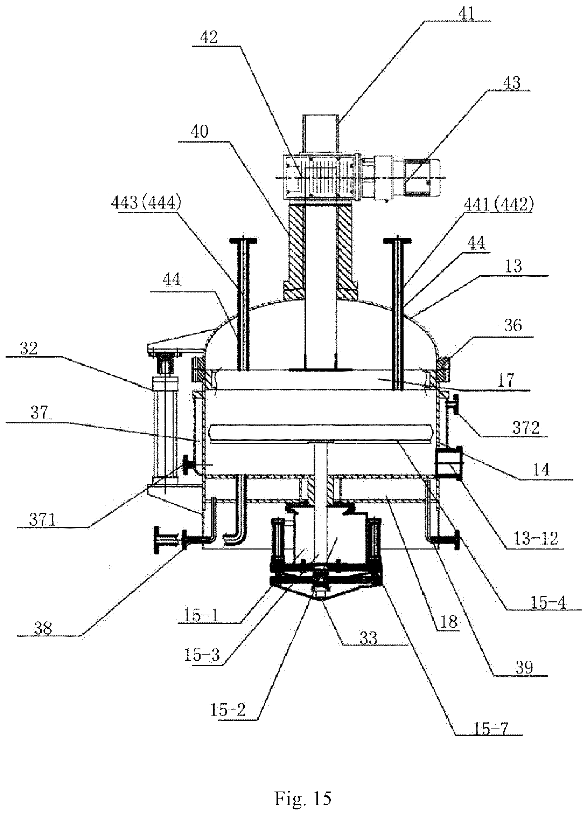

In a fifth embodiment, as shown in Fig. 15, a mechanical screw rod is used as power for pressurization in the present invention. The six-in-one press filter comprises a sealing head 13, a pressing plate assembly 17, a barrel body 14, a bottom assembly 18, a stirring assembly 33, maintenance oil cylinder assemblies 32 and a discharge port assembly 13-12; the sealing head 13 is connected with the barrel body 14 by a pot flange 36; the pressing plate assembly 17 is arranged inside the barrel body 14; and the maintenance oil cylinder assemblies 32 and the discharge port assembly 13-12 are arranged outside the barrel body 14. The bottom assembly 18 is arranged at the top of the barrel body 14; and the stirring assembly 33 is arranged outside the bottom of the bottom assembly 18. Three groups of maintenance oil cylinder assemblies are provided.

A mechanical speed reducer 40 and a mechanical screw rod 41 are arranged on the sealing head 13. The mechanical speed reducer 41 is connected with a first speed reducer 42 by a flange; and then the first speed reducer 42 is connected with a first motor 43. A screw rod pusher is arranged between the mechanical speed reducer 40 and the mechanical screw rod 41; and four guide columns C 44 are arranged on the sealing head 13, so that the mechanical screw rod 41 and the four guide columns C44 support the pressing plate assembly 17 to operate in parallel. The mechanical speed reducer 40 is connected with the sealing head 13 by a flange.

The guide columns C 44 are of a hollow structure. A first guide columns C 441 is a material feed port; a second guide columns C 442 is a filtrate outlet; a third guide columns C 443 is a fluid inlet; and a fourth guide columns C 444 is an airtight gas inlet in the pressing plate. The mechanical screw rod 41 penetrates through the sealing head 13 to be connected with the pressing plate assembly 17. The guide columns C 44 penetrate through the sealing head 13 to be connected with the pressing plate assembly 17. The guide column C 44 is provided with a protection device on the sealing head 13; the protection device is a linear bearing; and guide column connecting pieces are arranged on the guide columns C 44.

The first motor 43 is used as a power source for driving the mechanical screw rod 41 after changing speed by the second speed reducer 42; then, the mechanical screw rod 41 moves downwards through the mechanical speed reducer 40; and the force is increased to pressurize the pressing plate assembly 17 to form pressure. A movable device is arranged at a connection position between the mechanical screw rod 41 and the pressing plate assembly 17, so that the pressing plate assembly 17 is fixed without moving when the mechanical screw rod 41 rotates.

Jacket assemblies 37 are arranged outside the barrel body 13; and each jacket assembly 37 comprises an upper sealing plate of jacket, an annular plate of jacket, a lower sealing plate of jacket and a group of cold and hot media ports. The jacket assemblies 37 are used for heat preservation and heating or cooling; and the heat preservation material can be aluminum silicate heat preservation cotton, polyurethane foam and the like. The cold and hot media ports are arranged oppositely, up and down and correspondingly; and hot or cold media can be added to the jacket for heating or cooling. The jacket assemblies 37 are divided into two groups, wherein one group is provided with cold and hot media inlets 371 of jacket and the other group is provided with cold and hot media outlets 372 of jacket.

A group of bottom cold and hot media ports are formed in the bottom assembly 18, and comprise bottom cold and hot media inlets 38 and bottom cold and hot media outlets 39. The filter plate and the filter mesh are arranged at the bottom of the pressing plate assembly 17; and the filter plate and the filter mesh are arranged at a top surface of the bottom assembly 18.

The stirring assembly outside the bottom of the bottom assembly 18 comprises a speed reducer motor, an explosion-proof motor, a shaft-lifting oil cylinder and an S-shaped scraper. The speed reducer motor is connected with the explosion-proof motor and the stirring shaft; one end of the stirring shaft is connected with the S-shaped scraper, while the other end is connected with the shaft-lifting upper panel. The shaft-lifting lower panel is connected with the speed reducer motor; and the shaft-lifting oil cylinder is connected with the shaft-lifting upper panel and the shaft-lifting lower panel by the flanges.

Each maintenance oil cylinder assembly 32 comprises an upper connecting seat of oil cylinder, an oil cylinder connecting piece, an oil cylinder and a lower connecting seat of oil cylinder, wherein the upper connecting seat of oil cylinder is connected with the sealing head 13; the lower connecting seat of oil cylinder is connected with the barrel body 14; and three groups of maintenance oil cylinder assemblies 32 are provided. When the maintenance cylinder assemblies 32 operate, the oil cylinder is pressurized to open the sealing head 13 and open an internal maintenance space.

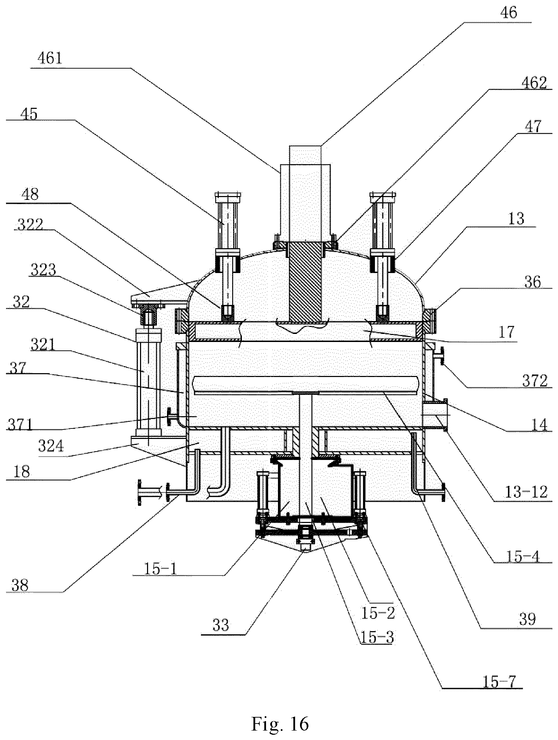

In a sixth embodiment, as shown in Fig. 16, a power device is used as power for pressurization in the present invention. The six-in-one press filter comprises a sealing head 13, a pressing plate assembly 17, a barrel body 14, a bottom assembly 18, a stirring assembly 33, maintenance oil cylinder assemblies 32 and a discharge port assembly 13-12; the sealing head 13 is connected with the barrel body 14 by a pot flange 36; the pressing plate assembly 17 is arranged inside the barrel body 14; and the maintenance oil cylinder assemblies 32 and the discharge port assembly 13-12 are arranged outside the barrel body 14. The bottom assembly 18 is arranged at the bottom of the barrel body 14; and the stirring assembly 33 is arranged outside the bottom assembly 18.

Guide columns D 46 are arranged on the sealing head 13. The guide columns D 46 penetrate through the sealing head 13 to be connected with the pressing plate assembly 17. The six-in-one press filter is also provided with a plurality of power devices. 45. The guide columns D 46 and the plurality of power devices. 45 support the pressing plate assembly 17 to operate in parallel, so that the power devices 45 drive the pressing plate assembly 17 to move up and down to form pressure. A guide shaft sleeve 461 is sleeved on each guide column D 46; and the guide sleeve 461 is connected with the sealing head 13 through a guide column flange 462. The power devices 45 are mounted on the sealing head 13; a mounting seat 47 is arranged at a joint between each power device 45 and the sealing head 13; and a connecting piece 48 is arranged at a joint between each power device 45 and the pressing plate assembly 17.

The power devices 45 can also be mounted on the bottom assembly 18. A sealing piece is arranged at a joint between each power device 45 and the sealing head 13; and the connecting piece 48 is arranged at the joint between each power device 45 and the pressing plate assembly 17. The sealing piece may be a Y-shaped gas sealing ring and an O-shaped sealing ring.

The power devices 45 can also be mounted between the sealing head 13 and the pressing plate assembly 17; the mounting seat 47 is mounted at the joint between each power device 45 and the sealing head 13; and the connecting piece 48 is arranged at the joint between each power device 45 and the pressing plate assembly 17.

The power devices 45 comprise but are not limited to oil cylinders, air cylinders, electric push rods and other devices; and two or more power devices 45 are provided.

Jacket assemblies 37 are arranged outside the barrel body 13; and each jacket assembly 37 comprises an upper sealing plate of jacket, an annular plate of jacket, a lower sealing plate of jacket and a group of cold and hot media ports. The jacket assemblies 37 are used for heat preservation and heating or cooling; and the heat preservation material can be aluminum silicate heat preservation cotton, polyurethane foam and the like. The cold and hot media ports are arranged oppositely, up and down and correspondingly; and hot or cold media can be added to the jacket for heating or cooling. The jacket assemblies 37 are divided into two groups, wherein one group is provided with cold and hot media inlets 371 of jacket and the other group is provided with cold and hot media outlets 372 of jacket.

A group of bottom cold and hot media ports are formed in the bottom assembly 18, and comprise bottom cold and hot media inlets 38 and bottom cold and hot media outlets 39. The filter plate and the filter mesh are arranged at the bottom of the pressing plate assembly 17; and the filter plate and the filter mesh are arranged at a top surface of the bottom assembly 18.

The stirring assembly outside the bottom of the bottom assembly 18 comprises a speed reducer motor, an explosion-proof motor, a shaft-lifting oil cylinder and an S-shaped scraper. The speed reducer motor is connected with the explosion-proof motor and the stirring shaft; one end of the stirring shaft is connected with the S-shaped scraper, while the other end is connected with the shaft-lifting upper panel. The shaft-lifting lower panel is connected with the speed reducer motor; and the shaft-lifting oil cylinder is connected with the shaft-lifting upper panel and the shaft-lifting lower panel by the flanges.

Each maintenance oil cylinder assembly 32 comprises an upper connecting seat of oil cylinder, an oil cylinder connecting piece, an oil cylinder and a lower connecting seat of oil cylinder, wherein the upper connecting seat of oil cylinder is connected with the sealing head 13; the lower connecting seat of oil cylinder is connected with the harrel horly 14; and three groups of maintenance oil cylinder assemblies 32 are provided. When the maintenance cylinder assemblies 32 operate, the oil cylinder is pressurized to open the sealing head 13 and open an internal maintenance space.

## Claims

1. A superimposed combined press filter, comprising a superimposed filter and a six-in-one press filter, wherein a solid discharge port (10) of the superimposed filter is connected with a feed port (20) of the six-in-one press filter; a sealing device is arranged at a joint between the solid discharge port and the feed port; the two ports are connected by a valve switch; a flange is connected by a sealing gasket and screws;
the superimposed filter performs primary filtration on materials to be filter-pressed and conveys the obtained solids to the six-in-one press filter; and the six-in-one press filter performs secondary filtration on the solids;
**characterized in that** the superimposed filter comprises a top plate (1), a bottom plate (3), a first stirring shaft (5), a speed reducer (6), a motor (7), and multiple layers of superimposed laminates (2) between the top plate and the bottom plate,
wherein filter plates are integrated on the laminates and wherein layer cavities are formed between the laminates,
wherein the first stirring shaft is connected with the motor through the speed reducer, and three S-shaped scraper type stirrers (8) are mounted on the first stirring shaft,
wherein a pneumatic or hydraulic knife valve discharge port (10) is formed in each layer of superimposed laminates, and a knife valve (12) is arranged at the discharge port and is configured to open and close the discharge port, wherein the discharge port of each laminate is connected with the knife valve by a hydraulically propped sealing surface, and during stirring the knife valve is closed and hydraulically propped against the sealing surface of each laminate, and during discharging the knife valve is opened and separated from each laminate, and
wherein the first stirring shaft drives the S-shaped scraper type stirrers to discharge the materials from the discharge port after the filtration.

2. The superimposed combined press filter according to claim 1, wherein the superimposed filter comprises layer connecting flanges, a sintered mesh (4), filter meshes, filter cloth, a feed port (9), a liquid discharge port; the motor is connected with the speed reducer by a flange;
the laminates are connected and locked by the layer connecting flanges or quick-opening flanges; two layers of filter meshes are configured in each layer cavity; diversion grooves (2-1) are formed in the laminates on the reverse sides of the filter meshes; filtrate outlets (11) and sight glasses (2-3) are arranged on side edges of the laminates; and filtrate flows to the laminates through the diversion grooves; pipes are welded with the laminates and are connected to the outside through an interlayer between an upper filter plate and a lower filter plate; and mesh plates (2-2) are arranged on the laminates.

3. The superimposed combined press filter according to claim 1, wherein the superimposed combined filter press uses hydraulic pressure as power for pressurization;
the six-in-one press filter comprises a sealing head (13), a barrel body (14), a transmission mechanism (15), a material pressing oil cylinder assembly (16), a pressing plate assembly (17), a bottom assembly (18) and a supporting frame;
the sealing head is connected to the barrel body, and is welded or connected through a bolt by a flange; a cylinder base is welded at the top of the sealing head; the material pressing oil cylinder assembly and the cylinder base are connected to the sealing head; the pressing plate assembly is arranged inside the barrel body and connected with the material pressing oil cylinder assembly;
the bottom assembly is located below the barrel body and welded with the barrel body; a feed port (13-1) and a cleaning port (13-2) are formed at one end of the sealing head; and a liquid outlet (13-3) and a vent port (13-4) are formed at the other end; a pressure relief valve (13-5), a pressure gauge (13-6), a viewing port, a gas sealing port (13-7), access ports (13-8), a pressing plate heating or freezing inlet (13-9) and a pressing plate heating or freezing outlet (13-10) are also provided; upper brackets (13-11) of jacking oil cylinder are arranged at two opposite sides of the sealing head; the feed port connected with the superimposed filter is formed in the barrel body;
the barrel body is provided with a barrel flange, a skirt edge and a temperature measuring tube; the barrel flange is welded with the barrel body; jackets and lower brackets (14-4) of jacking oil cylinder are welded at two opposite sides of the barrel body; the jacket at one side is provided with a jacket heating or freezing inlet (14-2); and the jacket at the other side is provided with a jacket heating or freezing outlet (14-3); the discharge port assembly (13-12) is arranged outside the barrel body and is welded with the barrel body;
the discharge port assembly comprises guide columns (13-121), a discharge oil cylinder (13-122), an oil cylinder fixing plate (13-123), fastening screw rods (13-124), a welded seat (13-125), a discharge port sealing plate (13-126) and a discharge port inner pump (13-127);
two guide columns are provided; one end of each guide column is welded with the barrel body; the other end of each guide column is connected with the oil cylinder fixing plate; the oil cylinder fixing plate is connected with the discharging oil cylinder; two fastening screw rods are arranged between the guide columns; one end of each fastening screw rod is connected with the oil cylinder fixing plate; the other end of each fastening screw rod is connected with the welded seat; the welded seat is connected with the discharge port inner pump; a sealing ring is mounted on the barrel body; and the discharge port inner pump is pushed by the discharge oil cylinder to be sealed by the sealing ring of the barrel body;
the transmission mechanism comprises a speed reducer motor (15-1), an explosion-proof motor (15-2), a stirring shaft (15-3), an S-shaped scraper (15-4), a shaft-lifting upper panel (15-5), a shaft-lifting lower panel (15-6) and a shaft-lifting oil cylinder (15-7);
the explosion-proof motor is connected with the speed reducer motor; the speed reducer motor is connected with the stirring shaft; one end of the stirring shaft is connected with the S-shaped scraper; the other end of the stirring shaft is connected with the shaft-lifting upper panel; the shaft-lifting lower panel is connected with the speed reducer motor; the shaft-lifting oil cylinder is connected with the shaft-lifting upper panel and the shaft-lifting lower panel through flanges; the S-shaped scraper is provided with a shaft sleeve and is connected with the stirring shaft through the shaft sleeve; and a cross section of the S-shaped scraper is rhombic or triangular;
the material pressing oil cylinder assembly comprises a material pressing oil cylinder (16-1), a material pressing oil cylinder tailstock (16-2) and a hydraulic power station of oil cylinder;
the hydraulic power station of oil cylinder is composed of an explosion-proof motor, an electromagnetic switch valve, a gear pump, hydraulic oil and a hydraulic oil pipe; the material pressing oil cylinder is connected with an oil cylinder seat; and the hydraulic power station is connected with oil pipes by oil pipes;
for the six-in-one filter, a single oil cylinder is used for press-filtering; and for the material pressing oil cylinder, the first design technology of non-standard hollow shaft hydraulic cylinder is adopted to transmit hydraulic pressure to the pressing plate assembly to directly extrude materials up and down, thereby extruding and filtering the materials in the barrel body;
the hydraulic power station uses the explosion-proof motor as power; and an explosion-proof electromagnetic valve works as the electromagnetic switch valve; multiple groups of control valves and pressure reducing valves are configured to realize multiple groups of different control pressures without mutual interference; the solids obtained by press-filtering are directly discharged to a gear rotating crusher after being stirred by the S-shaped scraper; and the dried materials are crushed.

4. The superimposed combined press filter according to claim 3, wherein the transmission mechanism is connected with the material pressing oil cylinder assembly and located at the top of the six-in-one press filter; and the speed reducer is connected with the material pressing oil cylinder tailstock;
the pressing plate assembly comprises a pressing plate flange (17-1), an upper panel of pressing plate (17-2), a lower panel of pressing plate (17-3), a concentric reducer (17-4) of pressing plate, a concentric reducer panel (17-5), a sintered mesh (17-6) of pressing plate, a feed port (17-7), a liquid outlet (17-8), a copper sleeve assembly (17-9), a stirring shaft sleeve (17-10), a gas sealing pipe (17-11), a gas sealing port (17-12), a pressing plate and shaft sleeve sealing groove, a concentric reducer supporting plate (17-13) and an upper-and-lower panel supporting plate (17-14) of pressing plate; the pressing plate flange is welded with the upper panel of pressing plate and the lower panel of pressing plate; the concentric reducer of pressing plate is welded with the upper panel of pressing plate; the concentric reducer panel is welded with the concentric reducer of pressing plate; the sintered mesh of pressing plate is welded to the lower panel of pressing plate; the gas sealing pipe is welded with the pressing plate flange, the stirring shaft sleeve and the upper panel of pressing plate; the stirring shaft sleeve is welded with the upper panel of pressing plate and the lower panel of pressing plate;
the bottom assembly comprises a bottom flange (18-1), a bottom barrel body (18-2), a bottom panel (18-3), a bottom sintered mesh (18-7), a bottom filtrate outlet (18-8), a bottom heating or freezing inlet (18-10), a bottom heating or freezing outlet (18-11), a bottom supporting plate (18-12), a bottom reinforcing rib (18-13), a locking flange (18-14), a locking flange fixing bracket (18-15), a locking oil cylinder (18-17), an oil cylinder seat, a jacking oil cylinder (18-16), an oil cylinder connecting piece (323) and a gas sealing pipe (18-5); the bottom flange is welded with the barrel body; the bottom panel is welded with flanges and reinforcing ribs; the bottom sintered mesh is welded with the bottom panel; the bottom filtrate outlet is connected with the bottom panel; the bottom heating or freezing inlet and the bottom heating or freezing outlet are connected with the bottom panel; the oil cylinder seat is connected with the bottom barrel body; the locking flange fixing bracket is welded with the bottom barrel body; the locking flange is connected with the locking flange fixing bracket; and the locking oil cylinder is connected with the oil cylinder seat.

5. The superimposed combined press filter according to claim 3, wherein the transmission mechanism is connected with the bottom assembly and located at the bottom of the six-in-one filter; and the speed reducer motor is connected with a speed reducer flange (18-19) below the bottom assembly;
the bottom assembly comprises a bottom flange, a bottom barrel body, a bottom panel, a copper sleeve assembly, a gas sealing pipe, a stirring shaft sleeve, a bottom sintered mesh, a bottom filtrate outlet, a shaft sleeve sealing groove, a bottom heating or freezing inlet, a bottom heating or freezing outlet, a bottom supporting plate, a bottom reinforcing rib, a locking flange, a locking flange fixing bracket, a locking oil cylinder, an oil cylinder seat, a jacking oil cylinder and an oil cylinder connecting piece; the bottom flange is welded with the barrel body; the gas sealing pipe is welded with the stirring shaft sleeve and the bottom panel; the bottom panel is welded with the bottom flange, the bottom reinforcing rib and the bottom sintered mesh; the bottom filtrate outlet, the bottom heating or freezing inlet and the bottom heating or freezing outlet are connected with the bottom panel; the oil cylinder seat is connected with the bottom barrel body; the locking flange fixing bracket is welded with the bottom barrel body; the locking flange is connected with the locking flange fixing bracket; and the locking oil cylinder is connected with the oil cylinder seat;
the pressing plate assembly comprises a pressing plate flange, an upper panel of pressing plate, a lower panel of pressing plate, a concentric reducer of pressing plate, a concentric reducer panel, a sintered mesh of pressing plate, a feed port, a liquid outlet, a gas sealing port, a pressing plate sealing groove, a concentric reducer supporting plate and an upper-and-lower panel supporting plate; the pressing plate flange is welded with the upper panel of pressing plate and the lower panel of pressing plate; the gas sealing pipe is welded with the upper panel of pressing plate; the concentric reducer of pressing plate is welded with the upper panel of pressing plate; the concentric reducer panel is welded with the concentric reducer of pressing plate; and the sintered mesh of pressing plate is welded to the lower panel of pressing plate.

6. The superimposed combined press filter according to claim 1, wherein the superimposed combined press filter adopts a hydraulic motor (24) as power for pressurization;
the superimposed combined press filter comprises a shaft lifting assembly (23), the hydraulic motor, a first stirring shaft, a top plate, a top filter layer (27); the shaft lifting assembly is arranged above the hydraulic motor; the hydraulic motor is connected with the first stirring shaft; the hydraulic motor is connected with the top plate by a hydraulic motor flange (26); the top plate is connected with the first stirring shaft by the top sealing assembly (25); a top filter layer is arranged below the top plate; a sintered mesh and the S-shaped scraper type stirrer are arranged on the top filter layer; the S-shaped scraper type stirrer is connected with the first stirring shaft; and a plurality of filter layers (28) are arranged below the top filter layer; a bottom connecting layer (29) is arranged at the bottom of the superimposed combined press filter;
a six-in-one press filter is connected below the bottom connecting layer, and comprises a barrel body and a sealing head; a discharge port assembly, a skirt assembly (14-6) and a pneumatic ball valve (14-7) are arranged at a side edge of the barrel body; the skirt assembly is connected with one end of a jacking and lifting assembly (22); the other end of the jacking and lifting assembly is connected with the top plate; the jacking and lifting assembly is connected with a guide column (30); the guide column is connected with a guide column lug (31); and the guide column lug is connected with the superimposed combined press filter;
a six-in-one filter layer is arranged inside the barrel body; the first stirring shaft is connected with the bottom assembly; the bottom assembly is connected with an S-shaped scraper; the pressing plate assembly is arranged above the sealing head; and a hydraulic oil cylinder (21) is connected below the sealing head.

7. The superimposed combined press filter according to claim 1, wherein the superimposed combined press filter uses fluid as power for pressurization;
the six-in-one press filter comprises a sealing head, a pressing plate assembly, a barrel body, a bottom assembly, a stirring assembly (33), maintenance oil cylinder assemblies (32) and a discharge port assembly; the sealing head is connected with the barrel body by a pot flange (36); the pressing plate assembly is arranged in the barrel body; the maintenance oil cylinder assemblies and the discharge port assembly are arranged outside the barrel body; the bottom assembly is arranged at the bottom of the barrel body; and the stirring assembly is arranged outside the bottom assembly;
a plurality of guide columns B (34) and positioning column structures (35) are arranged on the sealing head; the positioning column structures penetrate through the sealing head to be connected with the pressing plate; the guide columns B penetrate through the sealing head to be connected with the pressing plate; the sealing head is supported by the guide columns B and the positioning column structures so that the pressing plate operates inside the barrel body;
a pressure-bearing cavity is formed in a space between the pressing plate assembly and the sealing head; the fluid is pressurized by a pressurizing device through the guide columns B so that the pressure of the fluid is converted into the power, and thus the pressing plate assembly operates smoothly to achieve the effect of solid-liquid separation.

8. The superimposed combined press filter according to claim 1, wherein the superimposed combined press filter uses a mechanical screw rod (41) as power for pressurization;
the six-in-one press filter comprises a sealing head, a pressing plate assembly, a barrel body, a bottom assembly, a stirring assembly, maintenance oil cylinder assemblies and a discharge port assembly; the sealing head is connected with the barrel body by a pot flange; the pressing plate assembly is arranged inside the barrel body; the maintenance oil cylinder assemblies and the discharge port assembly are arranged outside the barrel body; the bottom assembly is arranged at the bottom of the barrel body; and the stirring assembly is arranged outside the bottom assembly;
a mechanical speed reducer (40) and a mechanical screw rod are arranged on the sealing head; the mechanical speed reducer is connected with a first speed reducer (42); then, the first speed reducer is connected with a first motor (43); a screw rod pusher is arranged between the mechanical speed reducer and the mechanical screw rod; a plurality of guide columns C (44) are arranged on the sealing head; the mechanical screw rod penetrates through the sealing head and is connected with the pressing plate assembly; and the guide columns C penetrate through the sealing head to be connected with the pressing plate assembly, so that the mechanical screw rod and the guide columns C support the pressing plate assembly to operate smoothly;
the first motor is used as a power source for driving the mechanical screw rod after changing speed by the first speed reducer; then, the mechanical screw rod moves downwards through the mechanical speed reducer; and the force is increased to pressurize the pressing plate assembly to form pressure.

9. The superimposed combined press filter according to claim 1, wherein the superimposed combined press filter uses a power device (45) as power for pressurization;
the six-in-one press filter comprises a sealing head, a pressing plate assembly, a barrel body, a bottom assembly, a stirring assembly, maintenance oil cylinder assemblies and a discharge port assembly; the sealing head is connected with the barrel body through flanges; the pressing plate assembly is arranged inside the barrel body; the maintenance oil cylinder assemblies and the discharge port assembly are arranged outside the barrel body; the bottom assembly is arranged at the bottom of the barrel body; and a stirring assembly is arranged outside the bottom assembly;
guide columns D (46) are arranged on the sealing head, and penetrate through the sealing head to be connected with the pressing plate assembly; the press filter is also provided with a plurality of power devices; the guide columns D and the plurality of power devices support the pressing plate assembly to operate in parallel, so that the power devices drive the pressing plate assembly to move up and down to form pressure.

10. The superimposed combined press filter according to claim 1, wherein the press filter adopts a nitrogen circulation airtight-drying technology or a pressure-reduced heating and drying technology; the equipment comprises a heater, a centrifugal fan, a condenser and a receiving tank; hot nitrogen outputted by the nitrogen heater is blown into the barrel body through the centrifugal fan to dry the materials; and a solvent brought out by the nitrogen during drying is recovered by the condenser through the sintered mesh after drying.

11. The superimposed combined press filter according to claim 3, wherein one or more of gas seal, O-shaped seal, square seal, Y-shaped seal and diamond seal is adopted as the sealing ring; and the sealing ring is made of rubber, which can be nitrile butadiene rubber (NBR), ethylene propylene diene monomer (EPDM) rubber, polytetrafluoroethylene (PTEF), styrene butadiene rubber (SBR), butyl rubber, chloroprene rubber (CR), silica gel, fluorine rubber and PTEF chlorinated rubber.

12. The superimposed combined press filter according to claim 4 or 5, wherein one or more of gas seal, O-shaped seal, square seal, Y-shaped seal and diamond seal is adopted as the pressing plate and shaft sleeve sealing groove; and the pressing plate and shaft sleeve sealing groove is made of rubber, which can be nitrile butadiene rubber (NBR), ethylene propylene diene monomer (EPDM) rubber, polytetrafluoroethylene (PTEF), styrene butadiene rubber (SBR), butyl rubber, chloroprene rubber (CR), silica gel, fluorine rubber and PTEF chlorinated rubber.

## Patentansprüche

1. Überlagerter kombinierter Pressfilter, umfassend einen überlagerten Filter und einem Sechs-in-Eins-Pressfilter, wobei ein Feststoffauslass (10) des überlagerten Filters mit einem Zufuhranschluss (20) des Sechs-in-Eins-Pressfilters verbunden ist; eine Dichtungseinrichtung an einer Verbindungsstelle zwischen dem Feststoffauslass und dem Zufuhranschluss angeordnet ist; der Feststoffauslass und der Zufuhranschluss durch einen Ventilschalter verbunden sind; ein Flansch mittels einer Dichtung und Schrauben angeschlossen ist;
der überlagerte Filter die Primärfiltration des zu filternden Materials durchführt und die gewonnenen Feststoffe zum Sechs-in-Eins-Pressfilter transportiert; und der Sechs-in-Eins-Pressfilter die Sekundärfiltration der Feststoffe durchführt;
**dadurch gekennzeichnet, dass** der überlagerte Filter eine Deckplatte (1), eine Bodenplatte (3), eine erste Rührwelle (5), ein Untersetzungsgetriebe (6), einen Motor (7) und mehrere Lagen überlagerter Laminate (2) zwischen der Deckplatte und der Bodenplatte umfasst,
wobei Filterplatten in die Laminate integriert sind und wobei zwischen den Laminaten Hohlräume ausgebildet sind;
wobei die erste Rührwelle über das Untersetzungsgetriebe mit dem Motor verbunden ist und drei S-förmige Schaberrührer (8) auf der ersten Rührwelle montiert sind;
wobei in jeder Lage überlagerter Laminate ein pneumatischer oder hydraulischer Messerventil-Auslass (10) ausgebildet ist und ein Messerventil (12) am Auslass angeordnet ist und zum Öffnen und Schließen des Auslasses dient, wobei der Auslass jedes Laminats über eine hydraulisch abgestützte Dichtfläche mit dem Messerventil verbunden ist und während des Rührvorgangs das Messerventil geschlossen und hydraulisch gegen die Dichtfläche jedes Laminats abgestützt ist, und während des Ausstoßens das Messerventil geöffnet und von jedem Laminat getrennt ist, und
wobei die erste Rührwelle die S-förmigen Schaberrührer antreibt, um das Material nach der Filtration aus dem Auslass auszustoßen.

2. Überlagerter kombinierter Pressfilter nach Anspruch 1, wobei der überlagerte Filter Lagenverbindungsflansche, ein Sintergewebe (4), Filtergewebe, Filtertuch, einen Zufuhranschluss (9) und einen Flüssigkeitsauslass umfasst; der Motor über einen Flansch mit dem Untersetzungsgetriebe verbunden ist;
die Laminate durch die Lagenverbindungsflansche oder Schnellöffnungsflansche verbunden und verriegelt sind; in jedem Lagenhohlraum zwei Lagen Filtergewebe angeordnet sind; Umlenknuten (2-1) in den Laminaten auf der Rückseite der Filtergewebe ausgebildet sind; Filtratausläufe (11) und Schaugläser (2-3) an den Seitenkanten der Laminate angeordnet sind; und das Filtrat durch die Umlenknuten zu den Laminaten fließt; Rohre mit den Laminaten verschweißt und durch eine Zwischenschicht zwischen einer oberen Filterplatte und einer unteren Filterplatte mit der Außenseite verbunden sind; und Gewebeplatten (2-2) auf den Laminaten angeordnet sind.

3. Überlagerter kombinierter Pressfilter nach Anspruch 1, wobei der überlagerte kombinierte Pressfilter hydraulischen Druck als Energiequelle zur Druckbeaufschlagung nutzt;
der Sechs-in-Eins-Pressfilter einen Dichtkopf (13), einen Zylinderkörper (14), einen Übertragungsmechanismus (15), eine Materialpressölzylinderbaugruppe (16), eine Pressplattenbaugruppe (17), eine Bodenbaugruppe (18) und einen Tragrahmen umfasst;
der Dichtkopf mit dem Zylinderkörper verbunden und mittels eines Flansches angeschweißt oder durch einen Bolzen verbunden ist; ein Zylindersockel auf dem Dichtkopf angeschweißt ist; die Materialpressölzylinderbaugruppe und der Zylindersockel mit dem Dichtkopf verbunden sind; die Pressplattenbaugruppe im Inneren des Zylinderkörpers angeordnet und mit der Materialpressölzylinderbaugruppe verbunden ist;
die Bodenbaugruppe unterhalb des Zylinderkörpers angeordnet und mit dem Zylinderkörper verschweißt ist; an einem Ende des Dichtkopfes ein Zufuhranschluss (13-1) und ein Reinigungsanschluss (13-2) ausgebildet sind; und am anderen Ende ein Flüssigkeitsauslauf (13-3) und ein Entlüftungsanschluss (13-4) ausgebildet sind; zusätzlich ein Druckbegrenzungsventil (13-5), ein Manometer (13-6), ein Sichtfenster, ein Gasdichtungsanschluss (13-7), Zugangsöffnungen (13-8), ein Druckplatten-Heiz- oder Kühleinlauf (13-9) und ein Druckplatten-Heiz- oder Kühlauslauf (13-10) vorgesehen sind; obere Halterungen (13-11) des Hubölzylinders an zwei gegenüberliegenden Seiten des Dichtkopfes angeordnet sind; der mit dem überlagerten Filter verbundene Zufuhranschluss im Zylinderkörper ausgebildet ist;
der Zylinderkörper mit einem Zylinderflansch, einem Kragenrand und einem Temperaturmessrohr versehen ist; der Zylinderflansch mit dem Zylinderkörper verschweißt ist; Mäntel und untere Halterungen (14-4) des Hubölzylinders an zwei gegenüberliegenden Seiten des Zylinderkörpers angeschweißt sind; der Mantel auf der einen Seite mit einem Mantelheizungsoder -kühlungseinlauf (14-2) versehen ist; und der Mantel auf der anderen Seite mit einem Mantelheizungs- oder -kühlungsauslauf (14-3) versehen ist; die Auslassbaugruppe (13-12) außerhalb des Zylinderkörpers angeordnet und mit dem Zylinderkörper verschweißt ist;
die Auslassbaugruppe Führungssäulen (13-121), einen Ölablasszylinder (13-122), eine Ölzylinder-Befestigungsplatte (13-123), Befestigungsschrauben (13-124), einen Schweißsitz (13-125), eine Auslass-Dichtungsplatte (13-126) und eine Auslass-Innenpumpe (13-127) umfasst;
zwei Führungssäulen vorgesehen sind; ein Ende jeder Führungssäule mit dem Zylinderkörper verschweißt ist; das andere Ende jeder Führungssäule mit der Ölzylinder-Befestigungsplatte verbunden ist; die Ölzylinder-Befestigungsplatte mit dem Ölablasszylinder verbunden ist; zwei Befestigungsschraubenstangen zwischen den Führungssäulen angeordnet sind; ein Ende jeder Befestigungsschraubenstange mit der Ölzylinder-Befestigungsplatte verbunden ist; das andere Ende jeder Befestigungsschraubenstange mit dem Schweißsitz verbunden ist; der Schweißsitz mit der Auslass-Innenpumpe verbunden ist; ein Dichtring am Zylinderkörper angebracht ist; und die Auslass-Innenpumpe durch den Ölablasszylinder gedrückt wird, um durch den Dichtring des Zylinderkörpers abzudichten;
der Übertragungsmechanismus einen Drehzahlreduziermotor (15-1), einen explosionsgeschützten Motor (15-2), eine Rührwelle (15-3), einen S-förmigen Abstreifer (15-4), ein oberes Wellenhebeteil (15-5), ein unteres Wellenhebeteil (15-6) und einen Wellenhebe-Ölzylinder (15-7) umfasst;
der explosionsgeschützte Motor mit dem Drehzahlreduziermotor verbunden ist; der Drehzahlreduziermotor mit der Rührwelle verbunden ist; ein Ende der Rührwelle mit dem S-förmigen Abstreifer verbunden ist; das andere Ende der Rührwelle mit dem oberen Wellenhebeteil verbunden ist; das untere Wellenhebeteil mit dem Drehzahlreduziermotor verbunden ist; der Wellenhebe-Ölzylinder über Flansche mit dem oberen Wellenhebeteil und dem unteren Wellenhebeteil verbunden ist; der S-förmige Abstreifer mit einer Wellenhülse versehen und über die Wellenhülse mit der Rührwelle verbunden ist; und der Querschnitt des S-förmigen Abstreifers rhombisch oder dreieckig ist;
die Materialpressölzylinderbaugruppe einen Materialpressölzylinder (16-1), einen Materialpressölzylinder-Reitstock (16-2) und eine hydraulische Ölzylinder-Kraftstation umfasst;
die hydraulische Ölzylinder-Kraftstation aus einem explosionsgeschützten Motor, einem elektromagnetischen Schaltventil, einer Zahnradpumpe, Hydrauliköl und einer Hydraulikleitung besteht; der Materialpressölzylinder mit einem Ölzylindersitz verbunden ist; und die hydraulische Kraftstation über Ölleitungen mit den Ölleitungen verbunden ist;
für den Sechs-in-Eins-Filter ein einzelner Ölzylinder für die Pressfiltration verwendet wird; und für den Materialpressölzylinder die neuartige Konstruktionstechnologie eines nicht standardmäßigen Hohlwellen-Hydraulikzylinders eingesetzt wird, um den Hydraulikdruck auf die Pressplattenbaugruppe zu übertragen und so das Material direkt nach oben und unten zu extrudieren, und dabei die Materialien im Zylinderkörper zu extrudieren und zu filtern;
die hydraulische Kraftstation den explosionsgeschützten Motor als Energiequelle nutzt; und ein explosionsgeschütztes elektromagnetisches Ventil als elektromagnetisches Schaltventil dient; mehrere Gruppen von Steuerventilen und Druckminderungsventilen so konfiguriert sind, dass mehrere Gruppen unterschiedlicher Steuerdrücke ohne gegenseitige Beeinflussung realisiert werden können; die durch Pressfiltration gewonnenen Feststoffe nach dem Umrühren durch den S-förmigen Abstreifer direkt einem Zahnradrotationsbrecher zugeführt werden; und das getrocknete Material zerkleinert wird.

4. Überlagerter kombinierter Pressfilter nach Anspruch 3, wobei der Übertragungsmechanismus mit der Materialpressölzylinderbaugruppe verbunden und oben auf dem Sechs-in-Eins-Pressenfilter angeordnet ist; und das Untersetzungsgetriebe mit dem Materialpressölzylinder-Reitstock verbunden ist;
die Pressplattenbaugruppe einen Pressplattenflansch (17-1), eine obere Platte der Pressplatte (17-2), eine untere Platte der Pressplatte (17-3), ein konzentrisches Reduzierstück der Pressplatte (17-4), eine konzentrische Reduzierstückplatte (17-5), ein Sintergewebe der Pressplatte (17-6), einen Zufuhranschluss (17-7), einen Flüssigkeitsauslauf (17-8), eine Kupferhülsenbaugruppe (17-9), eine Rührwellenhülse (17-10), ein Gasdichtungsrohr (17-11), einen Gasdichtungsanschluss (17-12), eine Dichtungsnut für die Pressplatte und Wellenhülse, eine Trägerplatte für das konzentrische Reduzierstück (17-13) und eine Trägerplatte der oberen und unteren Platte der Pressplatte (17-14) umfasst; der Pressplattenflansch mit der oberen Platte der Pressplatte und der unteren Platte der Pressplatte verschweißt ist; das konzentrische Reduzierstück der Pressplatte mit der oberen Platte der Pressplatte verschweißt ist; die konzentrische Reduzierstückplatte mit dem konzentrischen Reduzierstück der Pressplatte verschweißt ist; das Sintergewebe der Pressplatte mit der unteren Platte der Pressplatte verschweißt ist; das Gasdichtungsrohr mit dem Pressplattenflansch, der Rührwellenhülse und der oberen Platte der Pressplatte verschweißt ist; die Rührwellenhülse mit der oberen Platte der Pressplatte und der unteren Platte der Pressplatte verschweißt ist;
die Bodenbaugruppe einen Bodenflansch (18-1), einen Boden-Zylinderkörper (18-2), eine Bodenplatte (18-3), ein Bodensintergewebe (18-7), einen Boden-Filtratauslauf (18-8), einen Boden-Heiz- oder Gefriereinlauf (18-10), einen Boden-Heiz- oder Gefrierauslauf (18-11), eine Bodenstützplatte (18-12), eine Boden-Verstärkungsrippe (18-13), einen Verriegelungsflansch (18-14), eine Befestigungshalterung für den Verriegelungsflansch (18-15), einen Verriegelungsölzylinder (18-17), einen Ölzylindersitz, einen Hubölzylinder (18-16), ein Ölzylinderverbindungsstück (323) und ein Gasdichtungsrohr (18-5) umfasst; der Bodenflansch mit dem Zylinderkörper verschweißt ist; die Bodenplatte mit Flanschen und Verstärkungsrippen verschweißt ist; das Bodensintergewebe mit der Bodenplatte verschweißt ist; der Boden-Filtratauslauf mit der Bodenplatte verbunden ist; der Boden-Heiz- oder Gefriereinlauf und der Boden-Heiz- oder Gefrierauslauf mit der Bodenplatte verbunden sind; der Ölzylindersitz mit dem Boden-Zylinderkörper verbunden ist; die Befestigungshalterung für den Verriegelungsflansch mit dem Boden-Zylinderkörper verschweißt ist; der Verriegelungsflansch mit der Befestigungshalterung für den Verriegelungsflansch verbunden ist; und der Verriegelungsölzylinder mit dem Ölzylindersitz verbunden ist.

5. Überlagerter kombinierter Pressfilter nach Anspruch 3, wobei der Übertragungsmechanismus mit der Bodenbaugruppe verbunden und am Boden des Sechs-in-Eins-Filters angeordnet ist; und der Drehzahlreduziermotor mit einem Drehzahlreduzierflansch (18-19) unterhalb der Bodenbaugruppe verbunden ist;
die Bodenbaugruppe einen Bodenflansch, einen Boden-Zylinderkörper, eine Bodenplatte, eine Kupferhülsenbaugruppe, ein Gasdichtungsrohr, eine Rührwellenhülse, ein Bodensintergewebe, einen Boden-Filtratauslauf, eine Wellenhülsendichtungsnut, einen Boden-Heiz- oder Gefriereinlauf, einen Boden-Heiz- oder Gefrierauslauf, eine Bodenstützplatte, eine Boden-Verstärkungsrippe, einen Verriegelungsflansch, eine Befestigungshalterung für den Verriegelungsflansch, einen Verriegelungsölzylinder, einen Ölzylindersitz, einen Hubölzylinder und ein Ölzylinderverbindungsstück umfasst; der Bodenflansch mit dem Zylinderkörper verschweißt ist; das Gasdichtungsrohr mit der Rührwellenhülse und der Bodenplatte verschweißt ist; die Bodenplatte mit dem Bodenflansch, der Boden-Verstärkungsrippe und dem Bodensintergewebe verschweißt ist; der Boden-Filtratauslauf, der Boden-Heiz-oder Gefriereinlauf und der Boden-Heiz- oder Gefrierauslauf mit der Bodenplatte verbunden sind; der Ölzylindersitz mit dem Boden-Zylinderkörper verbunden ist; die Befestigungshalterung für den Verriegelungsflansch mit dem Boden-Zylinderkörper verschweißt ist; der Verriegelungsflansch mit der Befestigungshalterung für den Verriegelungsflansch verbunden ist; und der Verriegelungsölzylinder mit dem Ölzylindersitz verbunden ist;
die Pressplattenbaugruppe einen Pressplattenflansch, eine obere Platte der Pressplatte, eine untere Platte der Pressplatte, ein konzentrisches Reduzierstück der Pressplatte, eine konzentrische Reduzierstückplatte, ein Sintergewebe der Pressplatte, einen Zufuhranschluss, einen Flüssigkeitsauslauf, einen Gasdichtungsanschluss, eine Pressplatten-Dichtungsnut, eine Trägerplatte für das konzentrische Reduzierstück und eine Trägerplatte für die obere und untere Platte umfasst; der Pressplattenflansch mit der oberen Platte der Pressplatte und der unteren Platte der Pressplatte verschweißt ist; das Gasdichtungsrohr mit der oberen Platte der Pressplatte verschweißt ist; das konzentrische Reduzierstück der Pressplatte mit der oberen Platte der Pressplatte verschweißt ist; die konzentrische Reduzierstückplatte mit dem konzentrischen Reduzierstück der Pressplatte verschweißt ist; und das Sintergewebe der Pressplatte mit der unteren Platte der Pressplatte verschweißt ist.

6. Überlagerter kombinierter Pressfilter nach Anspruch 1, wobei der überlagerte kombinierte Pressfilter einen Hydraulikmotor (24) als Energiequelle zur Druckbeaufschlagung verwendet;
der überlagerte kombinierte Pressfilter eine Wellenhebebaugruppe (23), den Hydraulikmotor, eine erste Rührwelle, eine Deckplatte und eine obere Filterschicht (27) umfasst; die Wellenhebebaugruppe oberhalb des Hydraulikmotors angeordnet ist; der Hydraulikmotor mit der ersten Rührwelle verbunden ist; der Hydraulikmotor über einen Hydraulikmotorflansch (26) mit der Deckplatte verbunden ist; die Deckplatte über die obere Dichtungsbaugruppe (25) mit der ersten Rührwelle verbunden ist; eine obere Filterschicht unterhalb der Deckplatte angeordnet ist; ein Sintergewebe und ein S-förmiger Schaberrührer auf der oberen Filterschicht angeordnet sind; der S-förmige Schaberrührer mit der ersten Rührwelle verbunden ist; und mehrere Filterschichten (28) unterhalb der oberen Filterschicht angeordnet sind; eine Boden-Verbindungsschicht (29) am Boden des überlagerten kombinierten Pressfilters angeordnet ist;
ein Sechs-in-Eins-Pressfilter unterhalb der Boden-Verbindungsschicht verbunden ist und einen Zylinderkörper und einen Dichtkopf umfasst; eine Auslassbaugruppe, eine Schürzenbaugruppe (14-6) und ein pneumatisches Kugelventil (14-7) an einer Seitenkante des Zylinderkörpers angeordnet sind; die Schürzenbaugruppe mit einem Ende einer Hub- und Hebevorrichtung (22) verbunden ist; das andere Ende der Hub- und Hebevorrichtung mit der Deckplatte verbunden ist; die Hub- und Hebevorrichtung mit einer Führungssäule (30) verbunden ist; die Führungssäule mit einem Führungssäulenansatz (31) verbunden ist; und der Führungssäulenansatz mit dem überlagerten kombinierten Pressfilter verbunden ist;
eine Sechs-in-Eins-Filterschicht im Inneren des Zylinderkörpers angeordnet ist; die erste Rührwelle mit der Bodenbaugruppe verbunden ist; die Bodenbaugruppe mit einem S-förmigen Schaber verbunden ist; die Pressplattenbaugruppe oberhalb des Dichtkopfes angeordnet ist; und ein Hydraulikölzylinder (21) unterhalb des Dichtkopfes verbunden ist.

7. Überlagerter kombinierter Pressfilter nach Anspruch 1, wobei der überlagerte kombinierte Pressfilter Fluid als Energiequelle zur Druckbeaufschlagung nutzt;
der Sechs-in-Eins-Pressfilter einen Dichtkopf, eine Pressplattenbaugruppe, einen Zylinderkörper, eine Bodenbaugruppe, eine Rührbaugruppe (33), Wartungsölzylinderbaugruppen (32) und eine Auslassbaugruppe umfasst; der Dichtkopf mittels eines Topfflansches (36) mit dem Zylinderkörper verbunden ist; die Pressplattenbaugruppe im Zylinderkörper angeordnet ist; die Wartungsölzylinderbaugruppen und die Auslassbaugruppe außerhalb des Zylinderkörpers angeordnet sind; die Bodenbaugruppe am Boden des Zylinderkörpers angeordnet ist; und die Rührbaugruppe außerhalb der Bodenbaugruppe angeordnet ist;
mehrere Führungssäulen B (34) und Positionierungssäulenstrukturen (35) am Dichtkopf angeordnet sind; die Positionierungssäulenstrukturen durch den Dichtkopf hindurchgehen und mit der Pressplatte verbunden sind; die Führungssäulen B durch den Dichtkopf hindurchgehen und mit der Pressplatte verbunden sind; der Dichtkopf von den Führungssäulen B und den Positionierungssäulenstrukturen so getragen wird, dass die Pressplatte im Inneren des Zylinderkörpers arbeitet;
im Raum zwischen der Pressplattenbaugruppe und dem Dichtkopf ein drucktragender Hohlraum ausgebildet ist; das Fluid durch eine Druckvorrichtung über die Führungssäulen B unter Druck gesetzt wird, sodass der Fluiddruck in Energie umgewandelt wird und die Pressplattenbaugruppe dadurch reibungslos arbeitet, um die Fest-Flüssig-Trennung zu erzielen.

8. Überlagerter kombinierter Pressfilter nach Anspruch 1, wobei der überlagerte kombinierte Pressfilter eine mechanische Gewindespindel (41) als Energiequelle zur Druckbeaufschlagung nutzt;
der Sechs-in-Eins-Pressfilter einen Dichtkopf, eine Pressplattenbaugruppe, einen Zylinderkörper, eine Bodenbaugruppe, eine Rührbaugruppe, Wartungsölzylinderbaugruppen und eine Auslassbaugruppe umfasst; der Dichtkopf mittels eines Topfflansches mit dem Zylinderkörper verbunden ist; die Pressplattenbaugruppe im Inneren des Zylinderkörpers angeordnet ist; die Wartungsölzylinderbaugruppen und die Auslassbaugruppe außerhalb des Zylinderkörpers angeordnet sind; die Bodenbaugruppe am Boden des Zylinderkörpers angeordnet ist; und die Rührbaugruppe außerhalb der Bodenbaugruppe angeordnet ist;
ein mechanisches Untersetzungsgetriebe (40) und eine mechanische Gewindespindel am Dichtkopf angeordnet sind; das mechanische Untersetzungsgetriebe mit einem ersten Untersetzungsgetriebe (42) verbunden ist; danach das erste Untersetzungsgetriebe mit einem ersten Motor (43) verbunden ist; ein Spindelstangenschieber zwischen dem Untersetzungsgetriebe und der mechanischen Gewindespindel angeordnet ist; mehrere Führungssäulen C (44) am Dichtkopf angeordnet sind; die mechanische Gewindespindel durch den Dichtkopf hindurchführt und mit der Pressplattenbaugruppe verbunden ist; und die Führungssäulen C durch den Dichtkopf hindurchführen und mit der Pressplattenbaugruppe verbunden sind, sodass die mechanische Gewindespindel und die Führungssäulen C die Pressplattenbaugruppe stützen, um einen reibungslosen Betrieb zu gewährleisten;
der erste Motor als Energiequelle zum Antrieb der mechanischen Gewindespindel dient, nachdem seine Drehzahl durch das erste Untersetzungsgetriebe geändert wurde; danach sich die mechanische Gewindespindel durch das mechanische Untersetzungsgetriebe nach unten bewegt und die Kraft erhöht wird, um die Pressplattenbaugruppe unter Druck zu setzen und Druck zu erzeugen.

9. Überlagerter kombinierter Pressfilter nach Anspruch 1, wobei der überlagerte kombinierte Pressfilter ein Antriebsgerät (45) als Energiequelle zur Druckerzeugung nutzt;
der Sechs-in-Eins-Pressfilter einen Dichtkopf, eine Pressplattenbaugruppe, einen Zylinderkörper, eine Bodenbaugruppe, eine Rührbaugruppe, Wartungsölzylinderbaugruppen und eine Auslassbaugruppe umfasst; der Dichtkopf über Flansche mit dem Zylinderkörper verbunden ist; die Pressplattenbaugruppe im Inneren des Zylinderkörpers angeordnet ist; die Wartungsölzylinderbaugruppen und die Auslassbaugruppe außerhalb des Zylinderkörpers angeordnet sind; die Bodenbaugruppe am Boden des Zylinderkörpers angeordnet ist; und eine Rührbaugruppe außerhalb der Bodenbaugruppe angeordnet ist;
Führungssäulen D (46) auf dem Dichtkopf angeordnet sind und den Dichtkopf durchdringen, um mit der Pressplattenbaugruppe verbunden zu sein; der Pressfilter zusätzlich mit mehreren Antriebseinrichtungen ausgestattet ist; die Führungssäulen D und die mehreren Antriebseinrichtungen die Pressplattenbaugruppe zum Betrieb parallel stützen, sodass die Antriebseinrichtungen die Pressplattenbaugruppe auf und ab bewegen, um Druck zu erzeugen.

10. Überlagerter kombinierter Pressfilter nach Anspruch 1, wobei der Pressfilter eine Stickstoffzirkulations-Luftdichttrocknungstechnologie oder eine druckreduzierte Heiz- und Trocknungstechnologie verwendet; die Vorrichtung eine Heizung, einen Radialventilator, einen Kondensator und einen Auffangbehälter umfasst; heißer Stickstoff, der von der Stickstoffheizung abgegeben wird, durch den Radialventilator in den Zylinderkörper geblasen wird, um das Material zu trocknen; und ein während der Trocknung durch Stickstoff ausgestoßenes Lösungsmittel nach dem Trocknen durch das Sintergewebe mittels Kondensator zurückgewonnen ist.

11. Überlagerter kombinierter Pressfilter nach Anspruch 3, wobei als Dichtungsring eine oder mehrere der Folgende verwendet werden: Gasdichtung, O-förmige Dichtung, quadratische Dichtung, Y-förmige Dichtung und Diamantdichtung; der Dichtungsring aus Gummi besteht, wobei es sich um Nitril-Butadien-Kautschuk (NBR), Ethylen-Propylen-Dien-Monomer-Kautschuk (EPDM), Polytetrafluorethylen (PTFE), Styrol-Butadien-Kautschuk (SBR), Butylkautschuk, Chloroprenkautschuk (CR), Kieselgel, Fluorkautschuk oder chlorierter PTFE-Kautschuk handeln kann.

12. Überlagerter kombinierter Pressfilter nach Anspruch 4 oder 5, wobei als Dichtungsnut für die Pressplatte und Wellenhülse eine oder mehrere der Folgende verwendet werden: Gasdichtung, O-förmige Dichtung, quadratische Dichtung, Y-förmige Dichtung und Diamantdichtung; und die Dichtungsnut für die Pressplatte und Wellenhülse aus Gummi besteht, wobei es sich um Nitril-Butadien-Kautschuk (NBR), Ethylen-Propylen-Dien-Monomer-Kautschuk (EPDM), Polytetrafluorethylen (PTFE), Styrol-Butadien-Kautschuk (SBR), Butylkautschuk, Chloroprenkautschuk (CR), Kieselgel, Fluorkautschuk und chlorierten PTFE-Kautschuk handeln kann.

## Revendications

1. Filtre-presse combiné superposé, comprenant un filtre superposé et un filtre-presse six-en-un, dans lequel un orifice d'évacuation des solides (10) du filtre superposé est relié à un orifice d'alimentation (20) du filtre-presse six-en-un ; un dispositif d'étanchéité est disposé au niveau d'un joint entre l'orifice d'évacuation des solides et l'orifice d'alimentation ; les deux orifices sont reliés par un interrupteur à vanne ; une bride est reliée par un joint d'étanchéité et des vis ;
le filtre superposé effectue une filtration primaire sur des matériaux à filtrer sous pression et achemine les solides obtenus vers le filtre-presse six-en-un ; et le filtre-presse six-en-un effectue une filtration secondaire sur les solides ;
**caractérisé en ce que** le filtre superposé comprend une plaque supérieure (1), une plaque inférieure (3), un premier arbre d'agitation (5), un réducteur de vitesse (6), un moteur (7), et plusieurs couches de lamelles superposées (2) entre la plaque supérieure et la plaque inférieure,
dans lequel des plaques filtrantes sont intégrées sur les lamelles et dans lequel des cavités de couche sont formées entre les lamelles,
dans lequel le premier arbre d'agitation est relié au moteur par l'intermédiaire du réducteur de vitesse, et trois agitateurs racleurs en forme de S (8) sont montés sur le premier arbre d'agitation,
dans lequel un orifice d'évacuation à vanne guillotine pneumatique ou hydraulique (10) est formé dans chaque couche de lamelles superposées, et une vanne guillotine (12) est disposée au niveau de l'orifice d'évacuation et est configurée pour ouvrir et fermer l'orifice d'évacuation, dans lequel l'orifice d'évacuation de chaque lamelle est relié à la vanne guillotine par une surface d'étanchéité soutenue hydrauliquement, et pendant l'agitation la vanne guillotine est fermée et soutenue hydrauliquement contre la surface d'étanchéité de chaque lamelle, et pendant l'évacuation la vanne guillotine est ouverte et séparée de chaque lamelle, et
dans lequel le premier arbre d'agitation entraîne les agitateurs racleurs en forme de S pour évacuer les matériaux par l'orifice d'évacuation après la filtration.

2. Filtre-presse combiné superposé selon la revendication 1, dans lequel le filtre superposé comprend des brides de raccordement de couche, une maille frittée (4), des mailles filtrantes, un tissu filtrant, un orifice d'alimentation (9), un orifice d'évacuation de liquide ; le moteur est relié au réducteur de vitesse par une bride ;
les lamelles sont reliées et verrouillées par les brides de raccordement de couche ou des brides à ouverture rapide ; deux couches de mailles filtrantes sont configurées dans chaque cavité de couche ; des rainures de dérivation (2-1) sont formées dans les lamelles sur les faces inverses des mailles filtrantes ; des sorties de filtrat (11) et des voyants (2-3) sont disposés sur les bords latéraux des lamelles ; et le filtrat s'écoule vers les lamelles à travers les rainures de dérivation ; des tuyaux sont soudés aux lamelles et sont reliés à l'extérieur par une intercouche entre une plaque filtrante supérieure et une plaque filtrante inférieure ; et des plaques grillagées (2-2) sont disposées sur les lamelles.

3. Filtre-presse combiné superposé selon la revendication 1, dans lequel le filtre-presse combiné superposé utilise une pression hydraulique comme puissance pour la pressurisation ;
le filtre-presse six-en-un comprend une tête d'étanchéité (13), un corps de cuve (14), un mécanisme de transmission (15), un ensemble vérin hydraulique de pressage du matériau (16), un ensemble plaque de pressage (17), un ensemble inférieur (18) et un cadre de support ;
la tête d'étanchéité est reliée au corps de cuve, et est soudée ou reliée par un boulon par une bride ; une base de vérin est soudée au sommet de la tête d'étanchéité ; l'ensemble vérin hydraulique de pressage du matériau et la base de vérin sont reliés à la tête d'étanchéité ; l'ensemble plaque de pressage est disposé à l'intérieur du corps de cuve et relié à l'ensemble vérin hydraulique de pressage du matériau ;
l'ensemble inférieur est situé sous le corps de cuve et soudé au corps de cuve ; un orifice d'alimentation (13-1) et un orifice de nettoyage (13-2) sont formés à une extrémité de la tête d'étanchéité ; et une sortie de liquide (13-3) et un orifice d'évent (13-4) sont formés à l'autre extrémité ; une soupape de décharge (13-5), un manomètre (13-6), un orifice de visualisation, un orifice d'étanchéité au gaz (13-7), des orifices d'accès (13-8), une entrée de chauffage ou de refroidissement de la plaque de pressage (13-9) et une sortie de chauffage ou de refroidissement de la plaque de pressage (13-10) sont également prévus ; des supports supérieurs (13-11) du vérin de levage sont disposés sur deux côtés opposés de la tête d'étanchéité ; l'orifice d'alimentation relié au filtre superposé est formé dans le corps de cuve ;
le corps de cuve est pourvu d'une bride de cuve, d'un bord de jupe et d'un tube de mesure de température ; la bride de cuve est soudée au corps de cuve ; des jaquettes et des supports inférieurs (14-4) du vérin de levage sont soudés sur deux côtés opposés du corps de cuve ; la jaquette d'un côté est pourvue d'une entrée de chauffage ou de refroidissement de la jaquette (14-2) ; et la jaquette de l'autre côté est pourvue d'une sortie de chauffage ou de refroidissement de la jaquette (14-3) ; l'ensemble orifice d'évacuation (13-12) est disposé à l'extérieur du corps de cuve et est soudé au corps de cuve ;
l'ensemble orifice d'évacuation comprend des colonnes de guidage (13-121), un vérin hydraulique d'évacuation (13-122), une plaque de fixation du vérin (13-123), des tiges filetées de fixation (13-124), un siège soudé (13-125), une plaque d'étanchéité de l'orifice d'évacuation (13-126) et une pompe interne de l'orifice d'évacuation (13-127) ;
deux colonnes de guidage sont prévues ; une extrémité de chaque colonne de guidage est soudée au corps de cuve ; l'autre extrémité de chaque colonne de guidage est reliée à la plaque de fixation du vérin ; la plaque de fixation du vérin est reliée au vérin hydraulique d'évacuation ; deux tiges filetées de fixation sont disposées entre les colonnes de guidage ; une extrémité de chaque tige filetée de fixation est reliée à la plaque de fixation du vérin ; l'autre extrémité de chaque tige filetée de fixation est reliée au siège soudé ; le siège soudé est relié à la pompe interne de l'orifice d'évacuation ; une bague d'étanchéité est montée sur le corps de cuve ; et la pompe interne de l'orifice d'évacuation est poussée par le vérin hydraulique d'évacuation pour être étanchéifiée par la bague d'étanchéité du corps de cuve ;
le mécanisme de transmission comprend un motoréducteur (15-1), un moteur antidéflagrant (15-2), un arbre d'agitation (15-3), un racleur en forme de S (15-4), un panneau supérieur de levage d'arbre (15-5), un panneau inférieur de levage d'arbre (15-6) et un vérin hydraulique de levage d'arbre (15-7) ;
le moteur antidéflagrant est relié au motoréducteur ; le motoréducteur est relié à l'arbre d'agitation ; une extrémité de l'arbre d'agitation est reliée au racleur en forme de S ; l'autre extrémité de l'arbre d'agitation est reliée au panneau supérieur de levage d'arbre ; le panneau inférieur de levage d'arbre est relié au motoréducteur ; le vérin hydraulique de levage d'arbre est relié au panneau supérieur de levage d'arbre et au panneau inférieur de levage d'arbre par des brides ; le racleur en forme de S est pourvu d'un manchon d'arbre et est relié à l'arbre d'agitation par le manchon d'arbre ; et une section transversale du racleur en forme de S est rhombique ou triangulaire ;
l'ensemble vérin hydraulique de pressage du matériau comprend un vérin hydraulique de pressage du matériau (16-1), une culasse du vérin hydraulique de pressage (16-2) et une centrale hydraulique de vérin ;
la centrale hydraulique de vérin est composée d'un moteur antidéflagrant, d'une électrovanne, d'une pompe à engrenages, d'huile hydraulique et d'un tuyau d'huile hydraulique ; le vérin hydraulique de pressage du matériau est relié à un siège de vérin ; et la centrale hydraulique est reliée à des tuyaux d'huile par des tuyaux d'huile ;
pour le filtre six-en-un, un vérin unique est utilisé pour la filtration sous pression ; et pour le vérin hydraulique de pressage du matériau, la première technologie de conception de vérin hydraulique à arbre creux non standard est adoptée pour transmettre la pression hydraulique à l'ensemble plaque de pressage afin d'extruder directement les matériaux vers le haut et vers le bas, extrudant et filtrant ainsi les matériaux dans le corps de cuve ;
la centrale hydraulique utilise le moteur antidéflagrant comme puissance ; et une électrovanne antidéflagrante fonctionne comme électrovanne ; plusieurs groupes de vannes de commande et de vannes de réduction de pression sont configurés pour réaliser plusieurs groupes de différentes pressions de commande sans interférence mutuelle ; les solides obtenus par filtration sous pression sont directement évacués vers un broyeur rotatif à engrenages après avoir été agités par le racleur en forme de S ; et les matériaux séchés sont broyés.

4. Filtre-presse combiné superposé selon la revendication 3, dans lequel le mécanisme de transmission est relié à l'ensemble vérin hydraulique de pressage du matériau et situé au sommet du filtre-presse six-en-un ; et le réducteur de vitesse est relié à la culasse du vérin hydraulique de pressage ;
l'ensemble plaque de pressage comprend une bride de plaque de pressage (17-1), un panneau supérieur de plaque de pressage (17-2), un panneau inférieur de plaque de pressage (17-3), un réducteur concentrique (17-4) de plaque de pressage, un panneau de réducteur concentrique (17-5), une maille frittée (17-6) de plaque de pressage, un orifice d'alimentation (17-7), une sortie de liquide (17-8), un ensemble bague en cuivre (17-9), un manchon d'arbre d'agitation (17-10), une conduite d'étanchéité au gaz (17-11), un orifice d'étanchéité au gaz (17-12), une rainure d'étanchéité de plaque de pressage et de manchon d'arbre, une plaque de support du réducteur concentrique (17-13) et une plaque de support des panneaux supérieur et inférieur (17-14) de la plaque de pressage ; la bride de plaque de pressage est soudée au panneau supérieur de plaque de pressage et au panneau inférieur de plaque de pressage ; le réducteur concentrique de plaque de pressage est soudé au panneau supérieur de plaque de pressage ; le panneau de réducteur concentrique est soudé au réducteur concentrique de plaque de pressage ; la maille frittée de plaque de pressage est soudée au panneau inférieur de plaque de pressage ; la conduite d'étanchéité au gaz est soudée à la bride de plaque de pressage, au manchon d'arbre d'agitation et au panneau supérieur de plaque de pressage ; le manchon d'arbre d'agitation est soudé au panneau supérieur de plaque de pressage et au panneau inférieur de plaque de pressage ;
l'ensemble inférieur comprend une bride inférieure (18-1), un corps de cuve inférieur (18-2), un panneau inférieur (18-3), une maille frittée inférieure (18-7), une sortie de filtrat inférieure (18-8), une entrée de chauffage ou de refroidissement inférieure (18-10), une sortie de chauffage ou de refroidissement inférieure (18-11), une plaque de support inférieure (18-12), une nervure de renfort inférieure (18-13), une bride de verrouillage (18-14), un support de fixation de la bride de verrouillage (18-15), un vérin hydraulique de verrouillage (18-17), un siège de vérin, un vérin hydraulique de levage (18-16), une pièce de raccordement de vérin (323) et une conduite d'étanchéité au gaz (18-5) ; la bride inférieure est soudée au corps de cuve ; le panneau inférieur est soudé aux brides et aux nervures de renfort ; la maille frittée inférieure est soudée au panneau inférieur ; la sortie de filtrat inférieure est reliée au panneau inférieur ; l'entrée de chauffage ou de refroidissement inférieure et la sortie de chauffage ou de refroidissement inférieure sont reliées au panneau inférieur ; le siège de vérin est relié au corps de cuve inférieur ; le support de fixation de la bride de verrouillage est soudé au corps de cuve inférieur ; la bride de verrouillage est reliée au support de fixation de la bride de verrouillage ; et le vérin hydraulique de verrouillage est relié au siège de vérin.

5. Filtre-presse combiné superposé selon la revendication 3, dans lequel le mécanisme de transmission est relié à l'ensemble inférieur et situé au fond du filtre six-en-un ; et le motoréducteur est relié à une bride de réducteur (18-19) sous l'ensemble inférieur ;
l'ensemble inférieur comprend une bride inférieure, un corps de cuve inférieur, un panneau inférieur, un ensemble bague en cuivre, une conduite d'étanchéité au gaz, un manchon d'arbre d'agitation, une maille frittée inférieure, une sortie de filtrat inférieure, une rainure d'étanchéité de manchon d'arbre, une entrée de chauffage ou de refroidissement inférieure, une sortie de chauffage ou de refroidissement inférieure, une plaque de support inférieure, une nervure de renfort inférieure, une bride de verrouillage, un support de fixation de la bride de verrouillage, un vérin hydraulique de verrouillage, un siège de vérin, un vérin hydraulique de levage et une pièce de raccordement de vérin ; la bride inférieure est soudée au corps de cuve ; la conduite d'étanchéité au gaz est soudée au manchon d'arbre d'agitation et au panneau inférieur ; le panneau inférieur est soudé à la bride inférieure, à la nervure de renfort inférieure et à la maille frittée inférieure ; la sortie de filtrat inférieure, l'entrée de chauffage ou de refroidissement inférieure et la sortie de chauffage ou de refroidissement inférieure sont reliées au panneau inférieur ; le siège de vérin est relié au corps de cuve inférieur ; le support de fixation de la bride de verrouillage est soudé au corps de cuve inférieur ; la bride de verrouillage est reliée au support de fixation de la bride de verrouillage ; et le vérin hydraulique de verrouillage est relié au siège de vérin ;
l'ensemble plaque de pressage comprend une bride de plaque de pressage, un panneau supérieur de plaque de pressage, un panneau inférieur de plaque de pressage, un réducteur concentrique de plaque de pressage, un panneau de réducteur concentrique, une maille frittée de plaque de pressage, un orifice d'alimentation, une sortie de liquide, un orifice d'étanchéité au gaz, une rainure d'étanchéité de plaque de pressage, une plaque de support du réducteur concentrique et une plaque de support des panneaux supérieur et inférieur ; la bride de plaque de pressage est soudée au panneau supérieur de plaque de pressage et au panneau inférieur de plaque de pressage ; la conduite d'étanchéité au gaz est soudée au panneau supérieur de plaque de pressage ; le réducteur concentrique de plaque de pressage est soudé au panneau supérieur de plaque de pressage ; le panneau de réducteur concentrique est soudé au réducteur concentrique de plaque de pressage ; et la maille frittée de plaque de pressage est soudée au panneau inférieur de plaque de pressage.

6. Filtre-presse combiné superposé selon la revendication 1, dans lequel le filtre-presse combiné superposé adopte un moteur hydraulique (24) comme puissance pour la pressurisation ;
le filtre-presse combiné superposé comprend un ensemble de levage d'arbre (23), le moteur hydraulique, un premier arbre d'agitation, une plaque supérieure, une couche filtrante supérieure (27) ; l'ensemble de levage d'arbre est disposé au-dessus du moteur hydraulique ; le moteur hydraulique est relié au premier arbre d'agitation ; le moteur hydraulique est relié à la plaque supérieure par une bride de moteur hydraulique (26) ; la plaque supérieure est reliée au premier arbre d'agitation par l'ensemble d'étanchéité supérieur (25) ; une couche filtrante supérieure est disposée sous la plaque supérieure ; une maille frittée et l'agitateur racleur en forme de S sont disposés sur la couche filtrante supérieure ; l'agitateur racleur en forme de S est relié au premier arbre d'agitation ; et une pluralité de couches filtrantes (28) sont disposées sous la couche filtrante supérieure ; une couche de raccordement inférieure (29) est disposée au fond du filtre-presse combiné superposé ;
un filtre-presse six-en-un est relié sous la couche de raccordement inférieure, et comprend un corps de cuve et une tête d'étanchéité ; un ensemble orifice d'évacuation, un ensemble jupe (14-6) et une vanne à bille pneumatique (14-7) sont disposés sur un bord latéral du corps de cuve ; l'ensemble jupe est relié à une extrémité d'un ensemble de levage et de vérinage (22) ; l'autre extrémité de l'ensemble de levage et de vérinage est reliée à la plaque supérieure ; l'ensemble de levage et de vérinage est relié à une colonne de guidage (30) ; la colonne de guidage est reliée à une patte de colonne de guidage (31) ; et la patte de colonne de guidage est reliée au filtre-presse combiné superposé ;
une couche filtrante six-en-un est disposée à l'intérieur du corps de cuve ; le premier arbre d'agitation est relié à l'ensemble inférieur ; l'ensemble inférieur est relié à un racleur en forme de S ; l'ensemble plaque de pressage est disposé au-dessus de la tête d'étanchéité ; et un vérin hydraulique (21) est relié sous la tête d'étanchéité.

7. Filtre-presse combiné superposé selon la revendication 1, dans lequel le filtre-presse combiné superposé utilise un fluide comme puissance pour la pressurisation ;
le filtre-presse six-en-un comprend une tête d'étanchéité, un ensemble plaque de pressage, un corps de cuve, un ensemble inférieur, un ensemble d'agitation (33), des ensembles de vérins hydrauliques de maintenance (32) et un ensemble orifice d'évacuation ; la tête d'étanchéité est reliée au corps de cuve par une bride en cuvette (36) ; l'ensemble plaque de pressage est disposé dans le corps de cuve ; les ensembles de vérins hydrauliques de maintenance et l'ensemble orifice d'évacuation sont disposés à l'extérieur du corps de cuve ; l'ensemble inférieur est disposé au fond du corps de cuve ; et l'ensemble d'agitation est disposé à l'extérieur de l'ensemble inférieur ;
une pluralité de colonnes de guidage B (34) et de structures de colonnes de positionnement (35) sont disposées sur la tête d'étanchéité ; les structures de colonnes de positionnement traversent la tête d'étanchéité pour être reliées à la plaque de pressage ; les colonnes de guidage B traversent la tête d'étanchéité pour être reliées à la plaque de pressage ; la tête d'étanchéité est supportée par les colonnes de guidage B et les structures de colonnes de positionnement de sorte que la plaque de pressage fonctionne à l'intérieur du corps de cuve ;
une cavité de pression est formée dans un espace entre l'ensemble plaque de pressage et la tête d'étanchéité ; le fluide est pressurisé par un dispositif de pressurisation à travers les colonnes de guidage B de sorte que la pression du fluide est convertie en puissance, et ainsi l'ensemble plaque de pressage fonctionne en douceur pour obtenir l'effet de séparation solide-liquide.

8. Filtre-presse combiné superposé selon la revendication 1, dans lequel le filtre-presse combiné superposé utilise une tige filetée mécanique (41) comme puissance pour la pressurisation ;
le filtre-presse six-en-un comprend une tête d'étanchéité, un ensemble plaque de pressage, un corps de cuve, un ensemble inférieur, un ensemble d'agitation, des ensembles de vérins hydrauliques de maintenance et un ensemble orifice d'évacuation ; la tête d'étanchéité est reliée au corps de cuve par une bride en cuvette ; l'ensemble plaque de pressage est disposé à l'intérieur du corps de cuve ; les ensembles de vérins hydrauliques de maintenance et l'ensemble orifice d'évacuation sont disposés à l'extérieur du corps de cuve ; l'ensemble inférieur est disposé au fond du corps de cuve ; et l'ensemble d'agitation est disposé à l'extérieur de l'ensemble inférieur ;
un réducteur mécanique (40) et une tige filetée mécanique sont disposés sur la tête d'étanchéité ; le réducteur mécanique est relié à un premier réducteur (42) ; ensuite, le premier réducteur est relié à un premier moteur (43) ; un poussoir à vis est disposé entre le réducteur mécanique et la tige filetée mécanique ; une pluralité de colonnes de guidage C (44) sont disposées sur la tête d'étanchéité ; la tige filetée mécanique traverse la tête d'étanchéité et est reliée à l'ensemble plaque de pressage ; et les colonnes de guidage C traversent la tête d'étanchéité pour être reliées à l'ensemble plaque de pressage, de sorte que la tige filetée mécanique et les colonnes de guidage C supportent l'ensemble plaque de pressage pour un fonctionnement en douceur ;
le premier moteur est utilisé comme source d'alimentation pour entraîner la tige filetée mécanique après changement de vitesse par le premier réducteur ; ensuite, la tige filetée mécanique se déplace vers le bas à travers le réducteur mécanique ; et la force est augmentée pour pressuriser l'ensemble plaque de pressage afin de former une pression.

9. Filtre-presse combiné superposé selon la revendication 1, dans lequel le filtre-presse combiné superposé utilise un dispositif d'alimentation (45) comme puissance pour la pressurisation ;
le filtre-presse six-en-un comprend une tête d'étanchéité, un ensemble plaque de pressage, un corps de cuve, un ensemble inférieur, un ensemble d'agitation, des ensembles de vérins hydrauliques de maintenance et un ensemble orifice d'évacuation ; la tête d'étanchéité est reliée au corps de cuve par des brides ; l'ensemble plaque de pressage est disposé à l'intérieur du corps de cuve ; les ensembles de vérins hydrauliques de maintenance et l'ensemble orifice d'évacuation sont disposés à l'extérieur du corps de cuve ; l'ensemble inférieur est disposé au fond du corps de cuve ; et un ensemble d'agitation est disposé à l'extérieur de l'ensemble inférieur ;
des colonnes de guidage D (46) sont disposées sur la tête d'étanchéité, et traversent la tête d'étanchéité pour être reliées à l'ensemble plaque de pressage ; le filtre-presse est également pourvu d'une pluralité de dispositifs d'alimentation ; les colonnes de guidage D et la pluralité de dispositifs d'alimentation supportent l'ensemble plaque de pressage pour un fonctionnement en parallèle, de sorte que les dispositifs d'alimentation entraînent l'ensemble plaque de pressage pour se déplacer vers le haut et vers le bas afin de former une pression.

10. Filtre-presse combiné superposé selon la revendication 1, dans lequel le filtre-presse adopte une technologie de séchage étanche à circulation d'azote ou une technologie de séchage par chauffage sous pression réduite ; l'équipement comprend un réchauffeur, un ventilateur centrifuge, un condenseur et un réservoir de réception ; l'azote chaud émis par le réchauffeur d'azote est soufflé dans le corps de cuve par le ventilateur centrifuge pour sécher les matériaux ; et un solvant entraîné par l'azote pendant le séchage est récupéré par le condenseur à travers la maille frittée après le séchage.

11. Filtre-presse combiné superposé selon la revendication 3, dans lequel un ou plusieurs parmi un joint à gaz, un joint torique, un joint carré, un joint en Y et un joint losange est adopté comme bague d'étanchéité ; et la bague d'étanchéité est fabriquée en caoutchouc, qui peut être du caoutchouc nitrile-butadiène (NBR), du caoutchouc éthylène-propylène-diène monomère (EPDM), du polytétrafluoroéthylène (PTFE), du caoutchouc styrène-butadiène (SBR), du caoutchouc butyle, du caoutchouc chloroprène (CR), du gel de silice, du caoutchouc fluoré et du caoutchouc chloré PTFE.

12. Filtre-presse combiné superposé selon la revendication 4 ou 5, dans lequel un ou plusieurs parmi un joint à gaz, un joint torique, un joint carré, un joint en Y et un joint losange est adopté comme rainure d'étanchéité de plaque de pressage et de manchon d'arbre ; et la rainure d'étanchéité de plaque de pressage et de manchon d'arbre est fabriquée en caoutchouc, qui peut être du caoutchouc nitrile-butadiène (NBR), du caoutchouc éthylène-propylène-diène monomère (EPDM), du polytétrafluoroéthylène (PTFE), du caoutchouc styrène-butadiène (SBR), du caoutchouc butyle, du caoutchouc chloroprène (CR), du gel de silice, du caoutchouc fluoré et du caoutchouc chloré PTFE.
